(19) Europäisches Patentamt
European Patent Office
Office européen des brevets

(11) **EP 3 200 959 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(21) Anmeldenummer: **15775172.8**

(22) Anmeldetag: **01.10.2015**

(51) Int Cl.:
**B25J 9/00** (2006.01)      **G01N 23/04** (2018.01)

(86) Internationale Anmeldenummer:
**PCT/EP2015/072718**

(87) Internationale Veröffentlichungsnummer:
**WO 2016/050923 (07.04.2016 Gazette 2016/14)**

(54) **MANIPULATOR ZUR ERZEUGUNG EINER TRANSLATIONSBEWEGUNG**

MANIPULATOR FOR PRODUCING A TRANSLATIONAL MOVEMENT

MANIPULATEUR SERVANT À GÉNÉRER UN MOUVEMENT DE TRANSLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2014 DE 102014220065**

(43) Veröffentlichungstag der Anmeldung:
**09.08.2017 Patentblatt 2017/32**

(73) Patentinhaber: **Fraunhofer Gesellschaft zur Förderung der angewandten Forschung E.V.
80686 München (DE)**

(72) Erfinder:
• **LANDSTORFER, Peter**
  **94347 Ascha (DE)**
• **TISSEN, Alexander**
  **93435 Bad Reichenhall (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
WO-A2-2008/041092      DE-A1-102010 025 275
DE-T2- 60 314 424      US-B1- 6 196 081

## Beschreibung

Die Erfindung bezieht sich auf einen Manipulator zur Erzeugung einer Translationsbewegung.

Um bei einer (industriellen) Computertomographie-Untersuchung unter Verwendung einer Röntgenröhre und eines Röntgendetektors bei vertretbarem Zeitaufwand möglichst optimale Messergebnisse zu erzielen, ist es (neben der Beachtung einiger anderer wichtiger Parameter der Röntgenröhre) häufig notwendig, dass das zu messende Bauteil bzw. das Messobjekt möglichst zentrisch positioniert wird.

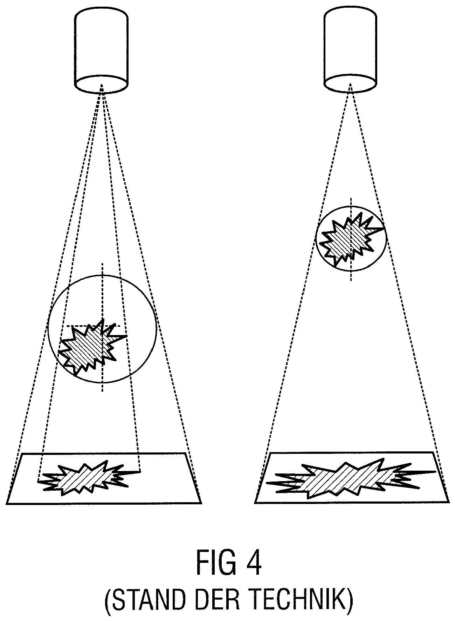

Wenn das Messobjekt exzentrisch auf eine Drehachse aufgespannt wird, taumelt es, was eine komplexere Rekonstruktion zur Folge haben kann und dazu führen kann, dass das Objekt vorübergehend einen von der Röntgenröhre ausgesandten Strahlkegel verlässt, oder es muss eine niedrigere Vergrößerungsstufe gewählt werden, als theoretisch notwendig, um die komplette Bauteilgeometrie zu erfassen. Dieser Sachverhalt ist in einem linken Bereich der Fig. 4 exemplarisch dargestellt: Die ungünstige Platzierung des schlecht zentrierten Messobjekts zwischen Röntgenquelle (oben) und -Detektor (unten) hat zur Folge, dass der Schatten bzw. das Durchstrahlungsbild des Werkstücks die zur Verfügung stehende Detektorfläche nicht optimal ausnutzt.

Wünschenswert wäre es, das Messobjekt so vor dem Detektor zu positionieren, dass es möglichst stark vergrößert möglichst viel Detektorfläche ausnutzt. Das kann realisiert werden, indem das Bauteil so positioniert bzw. aufgespannt wird, dass es bei einer Drehung um die eigene Achse mit der äußersten Kante einen möglichst kleinen Kreis beschreibt. Eine solches möglichst optimal zentriertes Messobjekt ist in einem rechten Bereich der Fig. 4 exemplarisch dargestellt.

Zur Positionierung des Messobjekts kann dabei ein Manipulator verwendet werden. Beispielhafte Manipulatoren umfassen die "Micro Positionlng Stage" der Firma Bruker oder Roboterkfnemaffken wie das "Hexapod", Die Positionierung erfordert aber zusätzlich Mechanik bzw. Aufwand mit zusätzlichen Antrieben, was die Kosten erhöht. Probleme der oben beschriebenen Art können auch anderswo auftreten.

Die US 6,196,081 B1 beschreibt Systeme und Verfahren, die Hexapod-Systeme, Stewart-Plattform-Systeme und andere mechanische Bewegungssysteme umfassen, bei denen ein Satz von unabhängig voneinander bewegbaren Lastfuhrwerken Beine tragen, die mit einer Arbeitsfläche koppelbar sind, die in der Lage ist, eine Werkzeugmaschine oder einen sonstigen Endeffektor zu halten, und bei denen sich die Lastfuhrwerke vorzugsweise über eine Referenzoberfläche bewegen, z.B. um den Umfang eines Kreises oder entlang eines anderen vordefinierten geometrischen Musters oder einer anderen vordefinierten geometrischen Bahn. Beispielsweise umfassen die Systeme Stewart-Plattform-Maschinen, die sechs Tragebeine aufweisen, von denen jedes mit einem Lastfuhrwerk verbunden werden kann, das sich unabhängig entlang einer Bahn bewegen kann. Durch Koordinieren der Bewegung dieser sechs Lastfuhrwerke kann die Arbeitsfläche im dreidimensionalen Raum bewegt werden und um drei Achsen ausgerichtet werden, wodurch eine Steuerung von Gieren, Stampfen und Rollen bereitgestellt wird.

Die Aufgabe der vorliegenden Erfindung besteht darin, einen verbesserten Manipulator zur Erzeugung einer Translationsbewegung zu schaffen, wie z. B. einen solchen, der eine kostengünstigere bzw. unaufwendigere Implementierung ermöglicht.

Diese Aufgabe wird durch den Gegenstand des Anspruchs 1 gelöst.

Die vorliegende Erfindung schafft dementsprechend einen Manipulator zur Erzeugung einer Translationsbewegung aus einer Rotationsbewegung, mit

einem ersten Bauteil, in dem eine erste Führung gebildet ist, die sich entlang einer Trajektorie erstreckt, die im Wesentlichen einer zu einer Rotationsachse des ersten Bauteils hin gekrümmten Kurve entspricht, die schräg zu einer Ebene senkrecht zu der Rotationsachse und schräg zu jeglichen Ebenen, die die Rotationsachse enthalten, verläuft;

einem zweiten Bauteil mit zumindest drei ersten Gelenkschnittstellen in einer ersten Gelenkebene;

einem dritten Bauteil mit zumindest drei zweiten Gelenkschnittstellen in einer zweiten Gelenkebene, wobei die zumindest drei ersten Gelenkschnittstellen und die zumindest drei zweiten Gelenkschnittstellen in einer zueinander kongruenten Weise angeordnet sind und die erste und die zweite Gelenkebene zueinander parallel sind; und

zumindest drei Umlenkhebeln, die jeweils mit einer dritten Gelenkschnittstelle mit einer jeweiligen der zumindest drei ersten Gelenkschnittstellen und jeweils mit einer vierten Gelenkschnittstelle mit einer jeweiligen der zumindest drei zweiten Gelenkschnittstellen gelenkartig verbunden sind, wobei ein erster der Umlenkhebel einen ersten Führungsfolgeabschnitt aufweist, der in der ersten Führung gelagert ist;

wobei der Manipulator so ausgebildet ist, dass das erste Bauteil und das zweite Bauteil durch die Rotationsbewegung gegeneinander um die Rotationsachse verdrehbar sind, wodurch das dritte Bauteil durch eine Führung des ersten Führungsfolgeabschnitts in der ersten Führung translatarisch bewegt wird.

Bei der Translationsbewegung handelt es sich beispielsweise um eine Bewegung in eine räumliche X- oder Y-Richtung.

Das erste Bauteil kann beispielsweise hohlzylinderförmig geformt sein bzw. es kann sich bei ihm um einen die Rotationsachse umgebenden Hohlzylinder handeln oder um einen oder mehrere Segmente desselben

Das zweite Bauteil kann ebenfalls beispielsweise zylinderförmig sein oder einen kreisförmigen Querschnitt aufweisen.

Das erste Bauteil und das zweite Bauteil können beispielsweise zentriert zur Rotationsachse angeordnet sein.

Bei dem dritten Bauteil kann es sich beispielsweise um einen (Werkstück-)Träger handeln, auf oder an dem ein zu untersuchendes Bauteil, (Mess-)Objekt oder Werkstück befestigt, aufgespannt oder eingespannt werden kann.

Der Führungsfolgeabschnitt kann beispielsweise eine Kugel aufweisen.

Bei der Führung kann es sich beispielsweise um eine Gleitbahn handeln, die zur Führung der Kugel ausgebildet ist.

In anderen Worten kann es sich bei dem in der Führung geführten Führungsfolgeabschnitt um eine in einer Gleitbahn laufende Kugel handeln.

Der Kerngedanke der vorliegenden Erfindung besteht darin, erkannt zu haben, dass ein Manipulator zur Erzeugung einer Translationsbewegung aus einer Rotationsbewegung mit unaufwendigerer Implementierungsmöglichkeit erhalten werden kann, indem er wie skizziert gestaltet wird. Dadurch ist es beispielsweise möglich, eine extern (beispielsweise durch den Antrieb der Drehachse eines CT-Geräts, eines Oberflächenscanners oder eines anderen Geräts) definierte Rotationsbewegung auf vorteilhafte Weise in eine translatorische Bewegung des dritten Bauteils, das beispielsweise einen Objektträger umfassen kann, und mithin eines daran angeordneten Objekts zu überführen. Hierfür wird beispielsweise eine X/Y-Kinematik auf Basis einer Parallelführung geschaffen, die von in Gleitbahnen (Trajektorien) laufenden Kugeln angesteuert werden kann.

Der Manipulator kann beispielsweise eine optimale Positionierung eines zu prüfenden Objekts zwischen Röntgen-Röhre und -Detektor ermöglichen. Damit müssen weniger nicht genutzte Pixel des Detektors den Rekonstruktionsalgorithmus mit durchlaufen und es werden somit beispielweise weder Auflösungsvermögen noch Messgenauigkeit der (CT-) Maschine verschenkt.

Es ist möglich, dass eine erste gegenüberliegende Führung in dem ersten Bauteil gebildet ist und sich darin entlang einer Trajektorie erstreckt, die durch eine Rotation um die Rotationsachse oder eine Spiegelung an der Rotationsachse in die Trajektorie der ersten Führung überführbar ist. Die gegenüberliegende Führung ermöglicht eine Führung eines jeweiligen Führungsfolgeabschnitts eines ebenfalls gegenüberliegend angeordneten Umlenkhebels, wodurch auftretende mechanische Kräfte besser verteilt werden können bzw. eine Stabilität der Lager des dritten Bauteils erhöht wird.

Eine Koppelvorrichtung kann vorgesehen sein, die in einen ersten Modus schaltbar ist, bei dem ein die Rotationsbewegung definierender Rotor mit dem ersten Bauteil und dem zweiten Bauteil gekoppelt ist, so dass sich das erste Bauteil und das zweite Bauteil nicht gegeneinander verdrehen und sich das erste, zweite und dritte Bauteil mit dem Rotor drehen, und die in einen zweiten Modus schaltbar ist, bei dem der die Rotationsbewegung definierende Rotor entweder von dem ersten Bauteil oder von dem zweiten Bauteil entkoppelt ist, so dass sich das erste Bauteil und das zweite Bauteil gegeneinander verdrehen. Im ersten Modus kann somit beispielsweise ein an dem dritten Bauteil angeordnetes Objekt unter Beibehaltung der Relativlage zu der Rotationsachse um die Rotationsachse gedreht werden, um eine vollständige Durchstrahlung des zu prüfenden Objekts aus allen Radialrichtungen durchzuführen, während im zweiten Modus eine Positionierung desselbigen bzw. eine Änderung der radialen Relativlage zwischen Objekt und Rotationsachse durchgeführt werden kann.

Ein weiteres Ausführungsbeispiel der vorliegenden Erfindung schafft einen Manipulator mit einem vierten Bauteil, das wie das erste Bauteil auch gegenüber dem zweiten Bauteil um die Rotationsachse verdrehbar angeordnet ist, wobei eine zweite Führung in dem vierten Bauteil gebildet ist, die sich entlang einer Trajektorie erstreckt, die im Wesentlichen einer zu einer Rotationsachse des ersten Bauteils hin gekrümmten Kurve entspricht, die schräg zu der Ebene senkrecht zu der Rotationsachse und schräg zu den jeglichen Ebenen, die die Rotationsachse enthalten, verläuft, wobei ein zweiter der Umlenkhebel einen zweiten Führungsfolgeabschnitt aufweist, der in der zweiten Führung gelagert ist, wobei das zweite Bauteil und das vierte Bauteil durch die Rotationsbewegung gegeneinander um die Rotationsache verdrehbar sind, wodurch das dritte Bauteil durch eine Führung des zweiten Führungsfolgeabschnitts in der zweiten Führung translatorisch bewegt wird, wobei aus der Rotationsbewegung des ersten Bauteils und des zweiten Bauteils gegeneinander eine Bewegung des dritten Bauteils in eine erste Richtung und aus der Rotationsbewegung des vierten Bauteils und des zweiten Bauteils gegeneinander eine Bewegung des dritten Bauteils in eine zweite Richtung resultiert. Somit kann beispielsweise ein auf dem dritten Bauteil platziertes oder aufgespanntes Werkstück in zwei definierte Richtungen (x/y) verfahren werden.

Das Vorsehen von 3 oder mehr Führungen für drei oder mehr der Umlenkhebel wirkt beispielsweise als Mittel zur Vermeidung, dass sich die Umlenkhebel gegenseitig verdrillen also nicht wie gewünscht stets zueinander parallel stehen. Wenn die Umlenhebel zu jedem Zeitpunkt bzw. bei jeder Position zueinander parallel sind, können die einzelnen Freiheitsgrade des Manipulators unabhängig voneinander angefahren werden. Die Sicherstellung, dass die Umlenkhebel parallel stehen, ist aber nicht nur darüber möglich, dass 3 oder mehr Führungen verwendet werden. Alternativ könnten Koppelstangen eingesetzt werden, die eine Verdrehung/Verdrillung der Umlenkhebel verhindern, oder es könnten Kardan gelenke anstelle von weniger aufwendigen Kugelgelenken verbaut werden.

Ein weiteres Ausführungsbeispiel der vorliegenden Erfindung schafft einen Manipulator, bei dem eine zweite gegenüberliegende Führung in dem vierten Bauteil gebildet ist und sich darin entlang einer Trajektorie erstreckt, die durch eine Rotation um die Rotationsachse oder eine Spiegelung an der Rotationsachse in die Trajektorie der zweiten Führung überführbar ist. Die gegenüberliegende Führung ermöglicht eine Führung eines jeweiligen Führungsfolgeabschnitts eines gegenüberliegend angeordneten Umlenkhebels, wodurch auftretende mechanische Kräfte besser verteilt werden können bzw. eine mechanische Stabilität erhöht werden kann.

Ein weiteres Ausführungsbeispiel der vorliegenden Erfindung schafft einen Manipulator mit einer Koppelvorrichtung, die in einen ersten Modus schaltbar ist, bei dem ein die Rotationsbewegung definierender Rotor mit dem ersten Bauteil, dem zweiten Bauteil und dem vierten Bauteil verkoppelt ist, so dass sich das erste Bauteil, das zweite Bauteil und das vierte Bauteil nicht gegeneinander verdrehen und sich das erste, zweite, dritte und vierte Bauteil mit dem Rotor drehen, und die in einen zweiten Modus schaltbar ist, bei dem der die Rotationsbewegung definierende Rotor von dem ersten Bauteil entkoppelt ist, so dass sich das erste Bauteil einerseits und das zweite und das vierte Bauteil andererseits gegeneinander verdrehen, und die in einen dritten Modus schaltbar ist, bei dem der die Rotationsbewegung definierende Rotor von dem vierten Bauteil entkoppelt ist, so dass sich das vierte Bauteil einerseits und das erste und das zweite Bauteil andererseits gegeneinander verdrehen. Der Manipulator ermöglicht damit eine je nach Anwendungsfall gewünschte Positionierung des dritten Bauteils, bzw. die relative radiale Lage des dritten Bauteils relativ zur Rotationsachse kann in zwei Radialrichtungen x und y verstellt werden, nämlich z. B. in x im zweiten Modus und in y im dritten Modus. Im ersten Modus kann beispielsweise eine Durchstrahlung eines auf dem dritten Bauteil platzierten Objekts aus verschiedenen Perspektiven ermöglicht werden.

Ein weiteres Ausführungsbeispiel der vorliegenden Erfindung schafft einen Manipulator mit einem fünften Bauteil, das gegenüber dem zweiten Bauteil um die Rotationsachse verdrehbar angeordnet ist, wobei eine dritte Führung in dem fünften Bauteils gebildet ist, wobei das dritte Bauteil eine Kippachse in der zweiten Gelenkebene aufweist, an der ein sechstes Bauteil kippbar an dem dritten Bauteil gelagert ist, wobei ein an dem zweiten Bauteil gelagertes Gestänge von einer Gelenkschnittstelle des sechsten Bauteils aus in einen dritten Führungsfolgeabschnitt mündet, der in der dritten Führung gelagert ist, wobei das fünfte Bauteil und das zweite Bauteil durch die Rotationsbewegung gegeneinander um die Rotationsache verdrehbar sind, wodurch das sechste Bauteil durch eine Führung des dritten Führungsfolgeabschnitts in der dritten Führung um die Kippachse gekippt wird. Somit kann zusätzlich zu einer translatorischen radialen Lageänderung des dritten Bauteils relativ zur Rotationsachse auch eine Änderung eines Kippwinkels des dritten Bauteils gegenüber einer Ebene senkrecht zur Rotationsachse erzielt werden. Die Kippwinkeländerung kann beispielsweise so gestaltet werden, dass die maximale Durchstrahlungslänge so kurz wie möglich ausfällt, was die Messdauer verkürzen kann.

Ein weiteres Ausführungsbeispiel der vorliegenden Erfindung schafft einen Manipulator, bei dem das sechste Bauteil durch die Führung des dritten Führungsfolgeabschnitts in der dritten Führung um einen Kippwinkel, der zwischen 30° und 60° liegt, aus der zweiten Gelenkebene kippbar ist. Das ist vorteilhaft, da insbesondere die Neigung des Messobjekts einen großen Einfluss auf das Ergebnis der Untersuchung haben kann. In der Regel erweist sich hier beispielsweise eine leichte Neigung des dritten Bauteils bzw. des Messobjekts von bis zu 45° als zielführend.

Ein weiteres Ausführungsbeispiel der vorliegenden Erfindung schafft einen Manipulator mit einer Koppelvorrichtung, die in einen ersten Modus schaltbar ist, bei dem ein die Rotationsbewegung definierender Rotor mit dem ersten Bauteil, dem zweiten Bauteil, dem vierten Bauteil und dem fünften Bauteil verkoppelt ist, so dass sich das erste Bauteil, das zweite Bauteil, das vierte Bauteil und das fünfte Bauteil nicht gegeneinander verdrehen und sich das erste, zweite, dritte, vierte und fünfte Bauteil mit dem Rotor drehen, und die in einen zweiten Modus schaltbar ist, bei dem der die Rotationsbewegung definierende Rotor von dem ersten Bauteil entkoppelt ist, so dass sich das erste Bauteil einerseits und das zweite, das vierte und das fünfte Bauteil andererseits gegeneinander verdrehen, und die in einen dritten Modus schaltbar ist, bei dem der die Rotationsbewegung definierende Rotor von dem vierten Bauteil entkoppelt ist, so dass sich das vierte Bauteil einerseits und das erste, das zweite und das fünfte Bauteil andererseits gegeneinander verdrehen, und die in einen vierten Modus schaltbar ist, bei dem der die Rotationsbewegung definierende Rotor von dem fünften Bauteil entkoppelt ist, so dass sich das fünfte Bauteil einerseits und das erste, das zweite und das vierte Bauteil andererseits gegeneinander verdrehen. Somit kann ein zu untersuchendes Objekt im zweiten bis vierten Modus beispielsweise innerhalb dreier voneinander unabhängiger Freiheitsgrade positioniert oder ausgerichtet werden, oder im ersten Modus um eine eigene Achse gedreht werden, um bspw. eine Durchstrahlung aus einem Winkelbereich von 360° durchzuführen.

Ein weiteres Ausführungsbeispiel der vorliegenden Erfindung schafft einen Manipulator, der eine Verdreheinschränkung aufweist, so dass die Bauteile gegeneinander maximal um einen Verdrehwinkel, der zwischen 30° und 60° liegt, verdrehbar sind. Eine Verdreheinschränkung kann mechanisch sinnvoll sein bzw. eine mechanische Stabilität des Manipulators erhöhen, wenn der Manipulator beispielsweise zur Feinjustierung der Position oder der Ausrichtung eines Messobjekts verwendet wird.

Ein weiteres Ausführungsbeispiel der vorliegenden Erfindung schafft einen Manipulator, der vier Umlenkhebel, vier erste Gelenke und vier zweite Gelenke aufweist, wobei die vier ersten Gelenke und die vier zweiten Gelenke jeweils an Ecken eines Quadrats angeordnet sind, das jeweils zentriert zur Rotationsachse ist. Das dritte Bauteil kann somit beispielsweise einen mechanisch stabilen an vier Umlenkhebeln beweglich befestigten viereckförmigen Träger umfassen. Die Umlenkhebel können weiterhin als statisch vorteilhafte Parallelführung fungieren.

Ein weiteres Ausführungsbeispiel der vorliegenden Erfindung schafft ein Computertomographie-Untersuchungsgerät mit einem Manipulator. Zum Antrieb der Verfahrbewegung kann somit beispielsweise ein bereits vorhandener Antrieb des Computertomographie-Untersuchungsgeräts genutzt werden, indem eine Rotationsbewegung des Antriebs in eine translatorische Bewegung des Messobjekts überführt wird. Der Manipulator muss dabei keinen eigenen Antrieb aufweisen.

Bevorzugte Ausführungsbeispiele der vorliegenden Erfindung werden nachfolgend Bezug nehmend auf die beiliegenden Zeichnungen erläutert. Es zeigen:

Fig. 1 veranschaulichend einen beispielhaften Manipulator auf schematische Weise;

Figuren 2a bis 2c verschiedene schematische Ansichten eines beispielhaften Manipulators;

Fig. 2d eine perspektivische Darstellung eines modifizierten beispielhaften Manipulators mit einem Computertomographie-Untersuchungsgerät;

Fig. 3 ein beispielhaftes fünftes und sechstes Bauteil mit einem Gestänge; und

Fig. 4 schematisch eine ungünstige und eine günstige Positionierung eines Messobjekts zwischen einer Röntgenröhre und einem Röntgendetektor.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

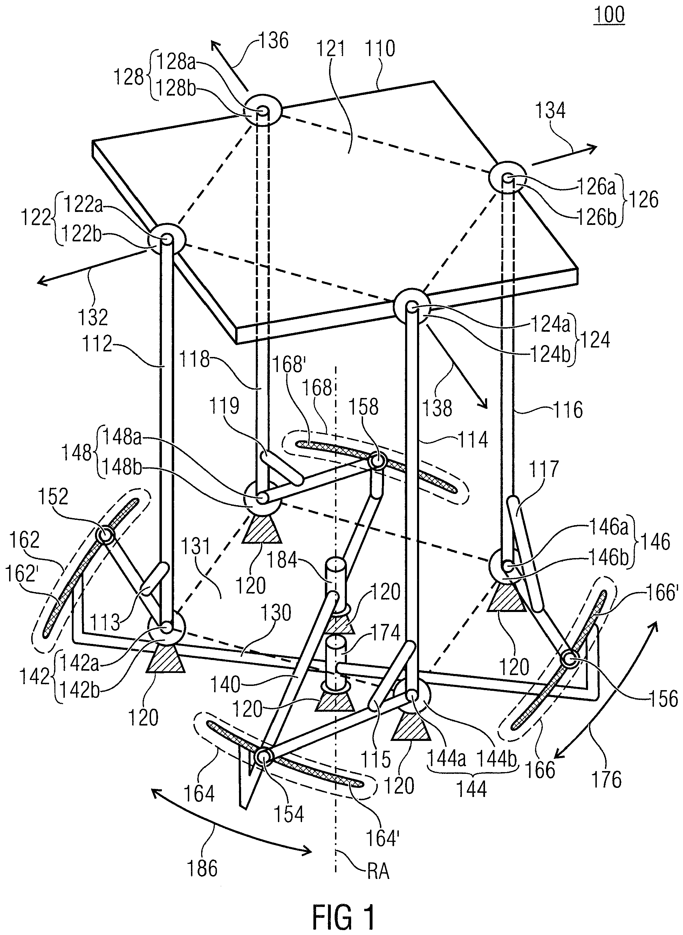

Fig. 1 zeigt veranschaulichend einen beispielhaften Manipulator 100 auf schematische Weise.

Der Manipulator 100 zur Erzeugung einer Translationsbewegung aus einer Rotationsbewegung umfasst dabei ein erstes Bauteil 130, in dem eine erste Führung 162 gebildet ist. Die Führung 162 erstreckt sich entlang einer Trajektorie 162', die im Wesentlichen einer zu einer später noch erörterten Rotationsachse RA des ersten Bauteils hin gekrümmten Kurve entspricht, die schräg zu einer Ebene senkrecht zu der Rotationsachse RA und schräg zu jeglichen Ebenen, in denen die Rotationsachse RA liegt, verläuft. Die Kurve ist beispielsweise ein Kreissegment. Bezeichne $\vec{r}$ einen Vektor auf der Rotationsachse RA, dann verläuft die Kurve der Trajektorie 162' beispielsweise schräg durch eine Ebene mit der Normalenorm $(\vec{x} - \vec{h}) \cdot \vec{r}$, wobei $\vec{x}$ für Werte, die die Geleichung erfüllt, die Punkte der Ebene bezeichnet, und $\vec{h}$ auf den Schnittpunkt der Ebene mit der Rotationsachse RA zeigt, und schräg durch Ebenen, die durch $\vec{r}$ einerseits und Vektoren senkrecht zu $\vec{r}$ andererseits aufgespannt werden. Die Kurve der Trajektorie 162' kann beispielsweise ein Kreissegment oder ein Helixsegment sein.

Das erste Bauteil 130 weist in der Fig. 1 exemplarisch nicht nur eine, sondern zwei gestrichelt gezeichnete Führungen 162 und 166 auf, die durch eine Spiegelung um die Rotationsachse RA ineinander überführbar sind.

Das erste Bauteil 130 kann als Hohlzylinder oder in Form von Hohlzylindersegmenten gebildet sein. Die Form des Bauteils ist in Fig. 1 aus Gründen der Anschaulichkeit nicht eingezeichnet, aber Beispiele folgenden in nachfolgenden Figuren.

Die Führung 162 erstreckt sich also entlang einer Trajektorie 162' und die gegenüberliegende Führung 166 erstreckt sich entlang einer Trajektorie 166'. Wie gesagt, kann die Trajektorie 162' der ersten Führung 162 kann durch eine Rotation um die Rotationsachse RA oder eine Spiegelung an der Rotationsachse RA in die Trajektorie 166' der gegenüberliegenden Führung 166 überführt werden und umgekehrt.

Jede Führung 162 und 166 kann durch eine Aussparung bzw. einen Graben oder einen Durchbruch bzw. Schlitz in dem Bauteil 162 gebildet sein. Das erste Bauteil kann näherungsweise rotationssymmetrisch sein.

Der Manipulator 100 umfasst ein zweites Bauteil 120 mit ersten Gelenkschnittstellen 142b, 144b, 146b und 148b in einer ersten Gelenkebene 131.

Das zweite Bauteil 120 wird in der Fig. 1 versinnbildlichend durch diagonal schraffierte Trapeze dargestellt. Hierdurch soll angedeutet werden, dass das zweite Bauteil 120 gegenüber einer Verdrehung des ersten Bauteils 130 als ortsfest betrachtet werden kann. Dies ist lediglich veranschaulichend so ausgeführt. Allgeminer ausgedrückt sind die Bauteile 120 und 130 gegeneinander um die Rotationsahse RA verdrehbar.

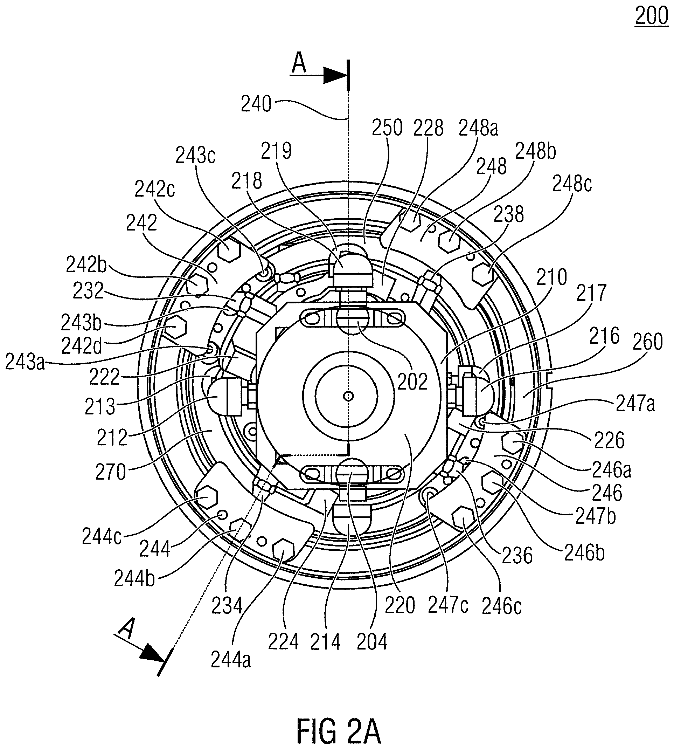

Das zweite Bauteil 120 weist die später noch näher in ihrer Funktion erläuterten vier Gelenkschnittstellen 142b, 144b, 146b und 148b auf, wobei die Anzahl wie noch erörtert auch anders gewählt sein könnte. Das zweite Bauteil 120 kann eine zylindrische Fläche aufweisen, die an einer entsprechenden zylindrischen Fläche des Bauteils 130 anliegt. Insbesondere kann das zweite Bauteil eine zylinderförmige Ausprägung aufweisen. Das zweite Bauteil 120 kann möglicherweise auch näherungsweise rotationssymmetrisch ausgebildet sein. Eine mögliche Implementierung eines zweiten Bauteils wird in den Figuren 2a bis 2c gezeigt.

Das zweite Bauteil 120 ist gemäß einer vorteilhaften Weiterbildung der vorliegenden Erfindung nicht nur zusammen mit dem ersten Bauteil 130 verdrehbar um die Rotationsachse gelagert, sondern auch um die Rotationsachse RA verdrehbar zusammen mit einem vierten Bauteil 140. Das vierte Bauteil 140 ist exemplarisch ähnlich ausgebildet wie das erste Bauteil 130. Das vierte Bauteil 140 weist also eine Führung 164 auf, die sich entlang einer Trajektorie 164' erstreckt, und eine gegenüberliegend angeordnete Führung 168, die sich entlang einer Trajektorie 168' erstreckt, wobei beide Führungen in dem vierten Bauteil 140 beispielsweise in Form von Gräben oder Schlitzen gebildet sind, die aus Gründen der Anschaulichkeit nicht in die Fig. 1 eingezeichnet ist. Beide Führungen werden bei einer Rotation des vierten Bauteils 140 um die Rotationsachse RA mitgedreht. Die Trajektorien 164' und 168' sind durch eine Rotation um die Rotationsachse RA oder eine Spiegelung an der Rotationsachse RA ineinander überführbar. Die Trajektorien 164' und 168' entsprechen ebenfalls jeweils im Wesentlichen einer zu der Rotationsachse RA hin gekrümmten Kurve, die schräg zu einer Ebene senkrecht zu der Rotationsachse RA und schräg zu jeglichen Ebenen, in denen die Rotationsachse RA liegt, verläuft. Auch das vierte Bauteil kann näherungsweise hohlzylinderförmig ausgebildet sein oder als ein oder mehrere Hohlzylindersegmente. Das vierte Bauteil kann näherungsweise rotationssymmetrisch sein. Eine mögliche Implementierung des vierten Bauteils wird in den Figuren 2a bis 2c gezeigt.

Lediglich veranschaulichend sind die Bauteile 130 und 140 in Fig. 1 räumlich übereinander angeordnet dargestellt. Es wäre auch denkbar, dass die Bauteile 130 und 140 beispielsweise durch konzentrisch angeordnete Hohlzylinder oder gebildet werden, die keinen räumlichen Versatz in der Höhe aufweisen bzw. entlang der Achse überlappend gebildet sind. Dabei kann das erstes Bauteil 130 beispielsweise durch einen Hohlzylinder bzw. ein oder mehrere Hohlzylindersegmente mit einer andere radialen Ausdehnung um die Rotationsachse herum gebildet sein als ein das vierte Bauteil 140 bildender weiterer Hohlzylinder bzw. als ein order mehrere das vierte Bauteil 140 bildende weitere Hohlzylindersegmente. D.h., Bauteile 130 aund 140 könnten beispielsweise einandergesteckt sein. Alternativ dazu weist das erstes Bauteil 130 bepielsweise einen oder mehrere Hohlzylindersegmente mit gleicher radialer Ausdehnung um die Rotationsachse auf wie ein oder mehrere das vierte Bauteil 140 bildende Hohlzylindersegmente, so dass die Hohlzylindersegmente gegeneinander radial ausgerichtet zueinander sind. Eine mögliche Implementierung des vierten Bauteils in Kombination mit einer möglichen Implementierung des zweiten Bauteil wird in den Figuren 2a bis 2c gezeigt und entspricht letztgenannter Alternative.

Der Manipulator 100 umfasst ferner ein drittes Bauteil 110 mit zweiten Gelenkschnittstellen 122b, 124b, 126b und 128b in einer zweiten Gelenkebene 121, wobei die ersten Gelenkschnittstellen 142b, 144b, 146b und 148b und die zweiten Gelenkschnittstellen 122b, 124b, 126b und 128b in einer zueinander kongruenten Weise angeordnet sind und die erste Gelenkebene 131 und die zweite Gelenkebene 121 zueinander parallel sind.

Der Manipulator 100 umfasst Umlenkhebel 112, 114, 116 und 118, die jeweils an einer dritten Gelenkschnittstelle 142a, 144a, 146a und 148a mit einer jeweiligen der ersten Gelenkschnittstellen 142b, 144b, 146b und 148b und jeweils an einer vierten Gelenkschnittstelle 122a, 124a, 126a und 128a mit einer jeweiligen der drei zweiten Gelenkschnittstellen 122b, 124b, 126b und 128b gelenkartig verbunden sind, wobei jeder Umlenkhebel 112, 114, 116 und 118 einen ersten Führungsfolgeabschnitt 152, 154, 156, 158 aufweist, der in der jeweils ersten Führung 162, 164, 166, 168 gelagert ist.

Der Manipulator 100 ist so ausgebildet, dass das erste Bauteil 130 und das zweite Bauteil 120 durch die Rotationsbewegung gegeneinander um die Rotationsachse RA verdrehbar sind, wodurch das dritte Bauteil 110 durch eine Führung des ersten Führungsfolgeabschnitts 152 in der ersten Führung 162 und eine entsprechende Kippung des Umlenkhebels 112 um das Gelenk 142 translatorisch bewegt wird. Es wird in anderen Worten also eine Translationsbewegung aus einer Rotationsbewegung erzeugt. Während der Rotationsbewegung wird natürlich auch der Führungsfolgeabschnitt 154 durch die Führung 166 geführt und dadurch eine entsprechende Kippung des Umlenkhebels 116 um das Gelenk 146 bewirkt.

Aus Gründen der Übersichtlichkeit und zum besseren Verständnis werden in der Fig. 1 das erste Bauteil 130, das zweite Bauteil 120, das dritte Bauteil 110, die Umlenkhebel 112, 114, 116 und 118 sowie jegliche Gelenkschnittstellen und auch der Führungsfolgeabschnitt 152 und die Führung 162 stark vereinfacht dargestellt.

Detaillierte Darstellungen von Ausführungsbeispielen dieser und anderer Elemente werden in den Figuren 2a bis 2c gezeigt.

Der Manipulator 100 weist also ein drittes Bauteil 110 auf. Bei dem dritten Bauteil 110 kann es sich wie in Fig. 1 exemplarisch veranschaulicht um einen (Werkstück-)Träger, der hier zudem exemplarisch und vereinfachend plattenförmig dargestellt ist, handeln. Insbesondere kann das dritte Bauteil 110 exemplarisch als rechtwinklige Platte ausgeführt sein. Das Bauteil 110 befindet sich in der in Fig. 1 dargestellten Stellung näherungsweise zentriert zu einer Rotationsachse RA und ansonsten senkrecht zur Rotationsachse RA.

Genauer ausgedrückt sind mit dem Bauteil 110 beweglich vier schematisch dargestellte Umlenkhebel 112, 114, 116 und 118 verbunden. Insbesondere verfügen die Umlenkhebel 112, 114, 116 und 118 an einem jeweiligen ersten (in Fig. 1 dem oberen) Ende über jeweils eine Gelenkschnittstelle 122a, 124a, 126a und 128a, über welche der jeweilige Umlenkhebel gelenkartig mit entsprechenden Gelenkschnittstellen 122b, 124b, 126b und 128b des Trägers 110 verbunden ist. Die Gelenkschnittstellen 122a, 124a, 126a und 128a bilden paarweise mit den jeweiligen Gelenkschnittstellen 122b, 124b, 126b und 128b jeweils ein Gelenk 122, 124, 126 und 128, wie z. B. ein Kugelgelenk. Die Gelenkschnittstellen 122a, 124a, 126a und 128a bzw. die Gelenke, die sie zusammen mit ihrem jeweiligen Gegenpart in Form der Gelenkschnittstellen 122b, 124b, 126b und 128b bilden, liegen exemplarisch in einer Gelenkebene 121, die gemäß Fig. 1 exemplarisch senkrecht zur Rotationsachse RA verläuft. Wie gesagt kann es sich bei den Gelenken beispielsweise um Kugelgelenke handeln. Alternativ können die Umlenkhebel 112, 114, 116 und 118 über andere bzw. anders ausgeformte Gelenke mit dem Bauteil 110 verbunden sein. Das Bauteil 110 könnte zudem auch anders ausgeformt sein. Das Bauteil 110 könnte beispielsweise eine Vorrichtung zum Auf- oder Einspannen eines Objekts oder Prüfkörpers aufweisen.

Die durch die Gelenkschnittstellen 122a, 124a, 126a und 128a sowie 122b, 124b, 126b und 128b jeweils paarweise gebildeten Gelenke ermöglichen eine translatorische Bewegung des Werkstückträgers 110, d. h. der Werkstückträger 110 kann beispielsweise näherungsweise nach links oder rechts, wie es durch Pfeile 132 und 134 dargestellt ist oder näherungsweise zum Betrachter hin oder vom Betrachter weg, wie es durch Pfeile 136 und 138 angedeutet ist, bewegt werden, also quer zur Rotationsachse RA. Es wird in anderen Worten also eine Verfahrbarkeit in zwei Richtungen ermöglicht, die näherungsweise zueinander orthogonal sind. Das "näherungsweise" bezieht sich auf die Tatsache, dass in Achsrichtung mit lateraler bzw. radialer Auslenkung des Bauteils 110 bzgl. der Rotationsachse RA auch eine Translation in Achsrichtung gemäß dem Kosinus der Auslenkung eintritt. Die Umlenkhebel 112, 114, 116 und 118 bleiben während des Verfahrvorgangs parallel zueinander. Man kann somit in anderen Worten auch von einer Parallelführung oder einer Parallelführungskinematik sprechen. Durch eine solche Parallelführungskinematik wird beispielsweise eine hohe Steifigkeit und ein weiter Verfahrweg bei geringem Bauraum erreicht.

Das dritte Bauteil 110 ist über die Umlenkhebel 112, 114, 116 und 118 beweglich mit dem zweiten Bauteil 120 verbunden, das in der Fig. 1 aus Gründen der Übersichtlichkeit wie erwähnt lediglich angedeutet ist. Das zweite Bauteil 120 umfasst Gelenkschnittstellen 142b, 144b, 146b und 148b, die zusammen mit jeweiligen Gelenkschnittstellen 142a, 144a, 146a und 148a an anderen Enden der Umlenkhebel 112, 114, 116 und 118 paarweise Gelenke 142, 144, 146 und 148 bilden, die in einer weiteren Gelenkebene 131 senkrecht zur Rotationsachse RA angeordnet sind. Bei den Gelenken 142, 144, 146 und 148 kann es sich beispielsweise wieder um Kugelgelenke handeln.

Die Gelenkebene 121 und die weitere Gelenkebene 131 sind näherungsweise zueinander parallel und die in der jeweiligen Gelenkebene jeweils liegenden Gelenke sind zueinander in kongruenter Weise angeordnet. Das heißt, die Gelenke 122, 124, 126 und 128 in der Gelenkebene 121 definieren Eckpunkte eines Polygons, das zu einem Polygon kongruent ist, an dessen Ecken die Gelenke 142, 144, 146 und 148 in der Gelenkebene 131 angeordnet sind. In anderen Worten kann bei der gezeigten Darstellung das Gelenk 122 auf das Gelenk 142, das Gelenk 124 auf das Gelenk 144, das Gelenk 126 auf das Gelenk 146 sowie das Gelenk 128 auf das Gelenk 148 durch eine gedachte Parallelverschiebung jeweils abgebildet werden.

In anderen Worten weist der Manipulator 100 vier Umlenkhebel 112, 114, 116 und 118, ein zweites Bauteil 120 mit vier Gelenkschnittstellen 142b, 144b, 146b und 148b und ein drittes Bauteil 110 mit vier Gelenkschnittstellen 122b, 124b, 126b und 128b auf, wobei die vier Gelenkschnittstellen 142b, 144b, 146b und 148b und die vier Gelenkschnittstellen 122b, 124b, 126b und 128b jeweils an Ecken eines Polygons, hier eines Quadrats, angeordnet sind und sich die Umlenkhebel 112, 114, 116 und 118 dazwischen befinden und jeweils über jeweilige Gelenkschnittstellen 142a, 144a, 146a und 148a sowie 122a, 124a, 126a und 128a gelenkartig mit dem zweiten Bauteil 120 und dem dritten Bauteil 110 verbunden sind, wobei das Quadrat in der Gelenkebene 121 oder in der Gelenkebene 131 zentriert zur Rotationsachse RA angeordnet sein kann, wie es auch in Fig. 1 angedeutet ist.

Jeder der Umlenkhebel 112, 114, 116 und 118 weist zusätzlich zu dem jeweiligen äquidistant beabstandeten Paar an Gelenkschnittstellen einen jeweiligen Führungsfolgeabschnitt 152, 154, 156 und 158 auf, der in einer jeweiligen Führung des Bauteils 140 oder 130 geführt ist. Dies ist nur ein Ausführungsbeispiel. Es kann auch ein Manipulator zur Erzeugung einer Translationsbewegung (aus einer Rotationsbewegung) erhalten werden, bei dem beispielsweise weniger als vier Umlenkhebel, wie z.B. nur ein Umlenkhebel, einen Führungsfolgeabschnitt aufweist, der in einer Führung gelagert ist.

Jeweilige Gelenkschnittstellen 122a, 124a, 126a und 128a, jeweilige Gelenkschnittstellen 142a, 144a, 146a und 148a und jeweilige Führungsfolgeabschnitt 152, 154, 156 und 158 bilden jeweils ein Dreieck. Die Umlenkehebel sind beispielsweise bespielsweise starr ausgeführt und das Dreicke somit ebenfalls starr. Das Dreieck ist unter den Umlenkhebeln kongruent. In anderen Worten sind die Gelenkschnittstelle 122a, die Gelenkschnittstelle 142a und der Führungsfolgeabschnitt 152 nicht kollinear angeordnet, die Gelenkschnittstelle 124a, die Gelenkschnittstelle 144a und der Führungsfolgeabschnitt 154 nicht kollinear angeordnet, die Gelenkschnittstelle 126a, die Gelenkschnittstelle 146a und der Führungsfolgeabschnitt 156 nicht kollinear angeordnet und die Gelenkschnittstelle 128a, die Gelenkschnittstelle 148a und der Führungsfolgeabschnitt 158 nicht kollinear angeordnet. Durch die gleichen Längen bzw. Entfernungen von 122a zu 142a, 124a zu 144a, 126a zu 146a und 128a zu 148a sowie aufgrund der Gestaltung der Trajektorien der Führungen blieben die Umlenkhebel stets parallel. So wird sichergestellt, dass sich die Translationsfreiheitsgrade voneinander unabhängig bewegen.

In der Fig. 1 sind die jeweiligen Gelenkschnittstellen und Führungsfolgeabschnitte exemplarisch so angeordnet, dass sie jeweils näherungsweise ein rechtwinkliges Dreieck bilden, wobei der jeweilige rechte Winkel jeweils an den Gelenkschnittstellen 142a, 144a, 146a und 148a angeordnet ist. Jeder dieser Winkel ist mechanisch fest ausgeführt, wie es durch kleine bezüglich einer Verlaufsrichtung eines jeweiligen Umlenkhebels 112, 114, 116 und 118 diagonale Streben 113, 115, 117 und 119 angedeutet ist. Auch hierbei handelt es sich lediglich um ein Ausführungsbeispiel. Anders geformte Umlenkhebel werden in den Figuren 2a-2d gezeigt.

Der Umlenkhebel 112 weist einen Führungsfolgeabschnitt 152 auf, der in der Führung 162 führbar gelagert ist. Der Führungsfolgeabschnitt 152 kann als kugelförmiges Ende ausgebildet sein, das durch die Führung 162 geführt wird. Die Führung 162 kann beispielsweise eine Aussparung oder ein Durchbruch in einer gekrümmten Innenseite, wie z.B. einer zylindrischen Innenseite, des ersten Bauteils 130 sein. In der Fig. 1 wird die Führung 162 aus Gründen der Übersichtlichkeit lediglich angedeutet. Es sei darauf hingewiesen, dass die Führung 162 so ausgebildet sein könnte, dass unabhängig von dem Winel der Verdrehung zwischen zweitem Bauteil 110 und erstem Bauteil 130 der Führungsfolgeabschnitt 152 gleich tief in die Führung eindringt bzw. eintaucht, oder dass die Eindringtiefe mit dem Verdrenwinkel variiert. Es kann eine Innenseite des Bauteils 130 gegenüber einer um die Rotationsachse zentrierten zylindrischen Ausführung beispielsweise eine leicht geänderte Krümmung aufweisen, so dass der Führungsfolgeabschnitt 152 bei jedem Verdrehwinkel genauso weit in die Führung eindringt. Somit kann es sich bei der Führung 162 und dem darin geführten Führungsfolgeabschnitt 152 beispielsweise um eine in einer Gleitbahn (Trajektorie) laufende Kugel handeln, die ausgebildet ist, um den Umlenkhebel 112 anzusteuern, nämlich letzteren um das Gelenk 142 zu kippen. Durch die Ausbildung der Führung 162 kann sich dabei eine Verdrehbeschränkung ergeben, so dass beispielsweise das erste Bauteil 130 oder das vierte Bauteil 140 einerseits und das zweite Bauteil 120 andererseits gegeneinander maximal um einen Verdrehwinkel, der zwischen 30° und 60° liegt, verdrehbar sind. Alternativ kann sich aus z. B. mechanischen Gründen eine Verdrehbeschränkung ergeben.

Das für den Führungsfolgeabschnitt 152 und die Führung 162 in den vorhergehenden zwei Absätzen Gesagte gilt inhaltlich im übertragenen Sinne auch für die anderen Paare von Führungsfolgeabschnitten und Führungen. Auf der gegenüberliegenden Seite des Manipulators 100 ist der Umlenkhebel 116 auf eine ähnliche Weise mittels des Führungsfolgeabschnitts 156 in der gegenüberliegenden Führung 166 des Bauteils 130 gelagert. Der Führungsfolgeabschnitt 156 ist wiederum kugelförmig und die Führung 166 gestrichelt angedeutet. Die Führung 166 erstreckt sich entlang einer Trajektorie 166', die aus einer Rotation oder einer Spiegelung an der Rotationsachse RA aus der Trajektorie 162' hervorgehen könnte.

Die Führungen 162 und 166 sind Teil desselben ersten Bauteils 130 und somit mechanisch miteinander verbunden bzw. starr zueinander. Das Bauteil 130 ist an einem Lager 174 drehbar an dem zweiten Bauteil 120 gelagert, wie es durch ein unterhalb des Lagers 174 angeordnetes diagonal schraffiertes Trapez angedeutet wird. Das Lager 174 ist näherungsweise rotationssymmetrisch und zentriert zu der Rotationsachse RA ausgeführt, dergestalt, dass das erste Bauteil 130 um die Rotationsachse (gegen andere Bauteile) verdreht werden kann.

Das erste Bauteil 130 und das zweite Bauteil 120 sind gegeneinander um die Rotationsachse RA verdrehbar, wie es durch einen rechter Hand angeordneten gekrümmten Doppelpfeil 176 angedeutet ist. Die Verdrehung kann bspw. so ausgeführt werden, dass sich das erste Bauteil 130 an dem Lager 174 dreht, während das zweite Bauteil 120 bezüglich der Drehung ortsfest ist. Dies ist lediglich veranschaulichend so dargestellt und könnte auch anders herum ausgeführt sein, also so, dass sich das zweite Bauteil 120 dreht und das erste Bauteil 130 ortsfest bleibt, oder bspw. auch so, dass sich das erste Bauteil 130 und das zweite Bauteil 120 mit verschiedenen Geschwindigkeiten um eine gemeinsame Drehachse drehen. Entscheidend ist, dass eine Verdrehung der Bauteile 120 und 130 gegeneinander erfolgt.

Aus einer Verdrehung der Bauteile 120 und 130 gegeneinander oder genauer gesagt aus der Führung des jeweiligen Führungsfolgeabschnitts 152 und 156 in der jeweiligen Führung 162 und 166 resultiert eine Neigung der Umlenkhebel 112 und 116 in die Richtung 136 oder die Richtung 138, je nachdem, in welche Richtung die Bauteile 120 und 130 gegeneinander verdreht werden. Bedingt durch die gelenkartige Verbindung der Umlenkhebel 112 und 116 mit dem dritten Bauteil 110 erfolgt die Neigung der Umlenkhebel in zueinander paralleler Weise. Das dritte Bauteil 110 bewegt sich dabei translatorisch.

In Analogie zu der soeben erläuterten Konfiguration der Umlenkhebel 112 und 116 sind auch die Umlenkhebel 114 und 118 vermittels eines jeweiligen Führungsfolgeabschnitts 154 bzw. 158 jeweils in Führungen 164 bzw. 168 gelagert. Die Führungen 164 und 168 sind wiederum gestrichelt gezeichnet; sie erstrecken sich jeweils entlang Trajektorien 164' und 168', die wiederum durch fett gezeichnete Kurven angedeutet werden. Dabei ist die Trajektorie 164' wiederum durch eine Rotation um die Rotationsachse RA auf die Trajektorie 168' abbildbar, oder umgekehrt.

Die Führungen 164 und 168 sind Teil des vierten Bauteils 140. Das vierte Bauteil 140 ist exemplarisch ähnlich zu dem ersten Bauteil 130 konfiguriert und in der Fig. 1 vereinfacht dargestellt. Das vierte Bauteil 140 weist beispielsweise ein mittig an der Rotationsachse RA angeordnetes Lager 184 auf. Das vierte Bauteil 140 (und damit die Führungen 164 und 168) ist dadurch beispielsweise an dem Lager 184 um die Rotationsachse RA an dem zweiten Bauteil 120 und gegen dieses verdrehbar gelagert, wie es durch einen unterhalb der Führung 164 eingezeichneten gekrümmten Doppelpfeil 186 angedeutet ist.

Eine Rotation des vierten Bauteils 140 und des zweiten Bauteils 120 gegeneinander resultiert nun bspw. in einer gemeinsamen Neigung der Umlenkhebel 114 und 118 entweder in die Richtung 132 oder in die Richtung 134, je nachdem, ob die Rotation mit oder gegen den Uhrzeigersinn erfolgt. Beispielsweise durch die mechanische Verbindung der Umlenkhebel 114 und 118 bedingt folgt eine translatorische Bewegung des Trägers 110, jeweils näherungsweise in die gleiche Richtung. Dies kann z. B. in analoger Weise wie vorhergehend anhand einer Verdrehung des ersten Bauteils 130 und des zweiten Bauteils 120 gegeneinander erläutert geschehen.

Der Träger 110 kann in anderen Worten also in eine erste Richtung (136 oder 138) oder in eine zweite Richtung (132 oder 134) bewegt werden, wobei die Bewegung in die erste Richtung bspw. aus einer Verdrehung des ersten Bauteils 130 und des zweiten Bauteils 120 gegeneinander resultiert und die Bewegung in die zweite Richtung bspw. aus einer Verdrehung des vierten Bauteils 140 und des zweiten Bauteils 120 gegeneinander resultiert. Denkbar wäre weiterhin, dass aus einer Verdrehung gegen den Uhrzeigersinn eine Bewegung des Trägers in die Richtung 136 bzw. 132 und aus einer Verdrehung mit dem Uhrzeigersinn eine Bewegung des Trägers in die Richtung 138 bzw. 134 resultiert, oder umgekehrt. Die Bewegung in die erste Richtung kann möglicherweise unabhängig von der Bewegung in die zweite Richtung gesteuert werden. In anderen Worten kann das dritte Bauteil 110 mit zumindest zwei Freiheitsgraden, denen zwei Richtungen zugeordnet sein können, verfahren werden.

Dabei kann das zweite Bauteil 120 (umfassend die Gelenkschnittstellen 142b, 144b, 146b und 148b) veranschaulichend als ortsfest betrachtet werden, so dass sich also entweder das erste Bauteil 130 (umfassend die Führungen 162 und 166) oder das vierte Bauteil 140 (umfassend die Führungen 164 und 168) gegen das zweite Bauteil 120 verdrehen kann. Alternativ können sich bspw. das erste Bauteil 130 und das vierte Bauteil 140 gegen das zweite Bauteil 120 verdrehen, oder das zweite Bauteil 120 einerseits verdreht sich gegen das vierte Bauteil 140 oder das erste Bauteil 130 andererseits, oder Kombinationen davon.

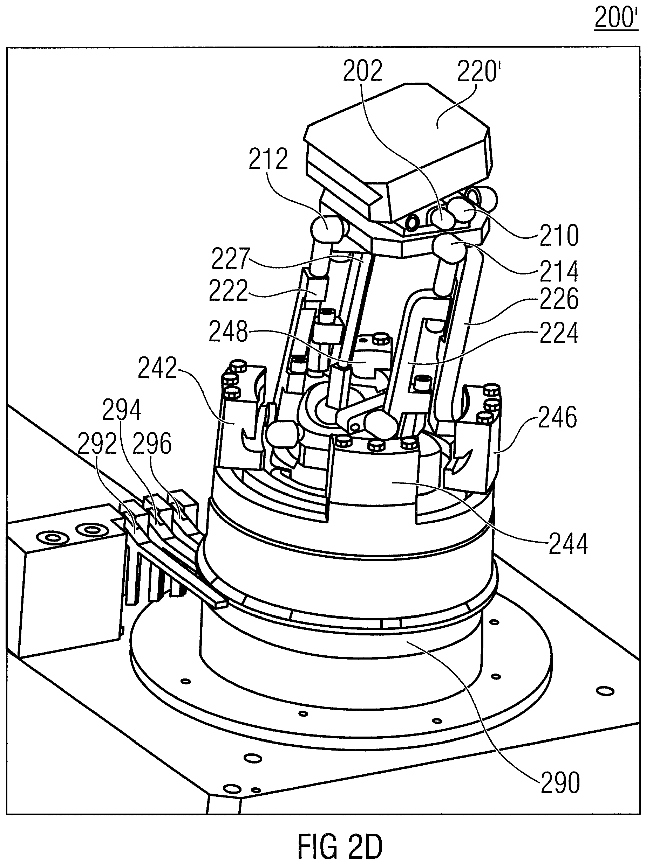

Um eine Steuerung dieser translatorischen Bewegung durch einen Bediener zu ermöglichen, weist ein Ausführungsbeispiel des Manipulators eine Koppelvorrichtung auf, die ausgebildet ist, um eine temporäre mechanische Verbindung zwischen dem ersten Bauteil 130 und einem externen eine Rotationsbewegung definierenden Rotor oder zwischen dem vierten Bauteil 140 und dem externen die Rotationsbewegung definierenden Rotor herzustellen oder zu trennen. Eine beispielhafte Koppelvorrichtung wird in der Fig. 2d gezeigt (Bezugszeichen 292, 294 und 296).

Es ist denkbar, dass der die Rotationsbewegung definierende Rotor einen Drehteller umfasst, wie er beispielsweise bei Industrie-Computertomographiegeräten zur Rotation eines zu untersuchenden Objekts (um die eigene Achse) häufig verwendet wird. In diesem Fall kann der Manipulator 100 z. B. auf oder an dem Drehteller befestigt werden, so dass zumindest das zweite Bauteil 120 bei einer Drehung des Drehtellers mitgedreht wird.

Die Koppelvorrichtung kann beispielsweise auch eine nicht mitdrehende (beispielsweise an einem Gehäuse des CT-Geräts angeordnete) Kupplung aufweisen, die in einem ersten Modus von allen Bauteilen entkoppelt ist, so dass alle Bauteile eine Rotationsbewegung durchführen. Somit kann beispielsweise eine vollständige CT-Untersuchung eines an oder auf dem dritten Bauteil platzierten Messobjekts erfolgen, indem letztere z. B. um eine gemeinsame Drehachse gedreht werden.

In einem zweiten Modus kann eine jeweilige Kupplung bspw. in das zweite Bauteil 120 oder das vierte Bauteil 140 einrasten und dieses festhalten, so dass also das zweite Bauteil 120 oder das vierte Bauteil 140 nicht mit dem Drehteller mitgedreht wird und sich mithin das erste Bauteil 130 oder das vierte Bauteil 140 gegen das zweite Bauteil 120 verdreht, woraus eine translatorische Bewegung des dritten Bauteils 110 resultiert. Die translatorische Bewegung kann bei diesem Konzept in zwei voneinander unabhängigen Freiheitsgraden gesteuert werden.

Die KoppeJvorrichtung kann weiterhin so ausgebildet sein, dass die mechanischen Verbindungen oder Kupplungen von einem Bediener hergestellt oder getrennt werden können.

Somit kann ein präzises Positionieren oder Ausrichten des dritten Bauteils 110 in zwei voneinander unabhängigen Raumrichtungen ermöglicht werden. Dies kann bspw. auch vor der eigentlichen messtechnischen Untersuchung erfolgen, um die (Fein-)Ausrichtung des Messobjekts zu überprüfen.

Es sei noch angemerkt, dass ein Manipulator auch mit nur drei Umlenkhebeln gebaut werden kann. Zusätzlich oder alternativ könnte nicht jeder, wie z.B. nur einer der Umlenkhebel, einen in einer Führung geführten Führungsfolgeabschnitt aufweisen mit dann lediglich dem Bauteil 130 und nicht dem Bauteil 140. Der in der Fig. 1 gezeigte Aufbau resultiert jedoch in einer hohen bzw. vergleichsweise höheren mechanischen Festigkeit. Weiterhin kann die translatorische Bewegung des dritten Bauteils 110 in Fig. 1 mit einem Freiheitsgrad mehr gesteuert werden, d.h. translatorisch entlang 136 und 134, was bei Vorsehen von lediglich Bauteil 130 anstelle von Bauteilen 130 und 140 nicht möglich wäre. Beispielsweise wäre es möglich obiges sowie nachfolgend beschriebenes Ausführungsbeispiel zu variieren, indem lediglich drei der vier gezeigten Paaren aus Führungsabschnitt und zugehöriger Führung verwendet werden. Die drei Umlenkhebel vermeiden dann ebenso wie die bisher gezeigten vier Umlenkhebel mit vier Paaren aus Führungsabschnitt und zugehöriger Führung, dass sich die Umlenkhebel gegenseitig verdrillen also nicht wie gewünscht stets zueinander parallel stehen. Wenn die Umlenkhebel zu jedem Zeitpunkt bzw. bei jeder Position zueinander parallel sind, können die einzelnen Freiheitsgrade des Manipulators unabhängig voneinander angefahren werden. Die Sicherstellung, dass die Umlenkhebel parallel stehen, ist aber nicht nur über das Vorsehen der zumindest drei Umlenkhebel mit den jeweils zwei Gelenkschnittstellen und der geführten Führungsfolgeabschnitt möglich, sondern es könnten alternativ oder zusätzlich Koppelstangen zwischen den Umlenkhebeln vorgesehen werden, die eine Verdrehung/Verdrillung der Umlenkhebel verhindern, oder es könnten Kardangelenke anstatt der hier vorgestellten Kugelgelenken verbaut werden, so dass die Anzahl der Paare aus Führungsabschnitt und zugehöriger Führung entsprechend auf weniger als drei reduziert werden könnte - mit oder ohne Aufgabe der Translationsfähigkeit in zwei Richtungen 136 und 134 auf lediglich eine derselben, indem einer der beiden Bauteil 130 und 140 vollständig weggelassen wird.

Figuren 2a bis 2c zeigen verschiedene schematische Ansichten eines beispielhaften Manipulators 200.

Der Manipulator 200 ist eine vorteilhafte Implementierungsmöglichkeit eines erfindungsgemäßen Manipulators. Der Manipulator 200 weist exemplarisch Elemente oder zusätzliche Bauteile auf, die beispielsweise ausgebildet sind, um eine mechanische Stabilität zu erhöhen, um eine Kopplung zu anderen Vorrichtungen zu ermöglichen, oder um dem eingangs skizzierten Grundkonzept weitere Freiheitsgrade hinzuzufügen. Gleichwohl sei angemerkt, dass die folgenden Erläuterungen sinngemäß auch auf Elemente des Manipulators 100 (siehe Fig. 1) anwendbar sind, insbesondere, insofern sie sich auf ein erstes, zweites oder drittes (oder viertes) Bauteil oder jegliche Umlenkhebel, Gelenkschnittstellen, Führungen oder Führungsfolgeabschnitte beziehen.

Fig. 2a zeigt eine Draufsicht auf einen beispielhaften Manipulator 200. Der Manipulator 200 weist zunächst ein drittes Bauteil 210 auf, das durch ein Quadrat mit abgeflachten Ecken gebildet ist. Es kann sich beispielsweise um einen Werkstückträger handeln. An oder über diesem kippbar ausgebildet ist ein sechstes Bauteil 220, das durch drei konzentrische Kreise angedeutet wird. Bei diesem sechsten Bauteil 220 handelt es sich beispielsweise um einen an einer Kippachse an dem dritten Bauteil 210 kippbar gelagerten Werkstückaufspanner. Die Lage der Kippachse wird exemplarisch durch zwei sich gegenüberliegende Gelenke 202 und 204 definiert, die ein (gesteuertes) Kippen oder Neigen des sechsten Bauteils 220 ermöglichen. Die Gelenke 202 und 204 können wiederum paarweise aus jeweils zwei Gelenkschnittstellen gebildet sein, wobei eine jeweilige erste Gelenkschnittstelle an dem dritten Bauteil 210 ausgebildet ist und eine jeweilige zweite Gelenkschnittstelle an dem sechsten Bauteil 220.

Das dritte Bauteil 210 ist über Gelenke 212, 214, 216 und 218 mit jeweiligen Umlenkhebeln 222, 224, 226 und 228 gelenkartig verbunden. Dabei fungieren an einem jeweiligen Umlenkhebel beispielsweise Gelenkpfannen als Gelenkschnittstellen, während das dritte Bauteil 210 jeweils kugelförmige Gelenkköpfe als Gelenkschnittstellen aufweist. Dies kann beispielsweise auch anders herum ausgeführt sein, also so, dass ein jeweiliger Umlenkhebel einen Gelenkkopf als Gelenkschnittstelle aufweist und an dem dritten Bauteil 210 jeweilige Gelenkpfannen als Gelenkschnittstellen ausgebildet sind.

Die aus einem jeweiligen Gelenkschnittstellenpaar jeweils gebildeten Gelenke 212, 214, 216 und 218 ermöglichen eine translatorische Bewegung des dritten Bauteils 210, beispielsweise in der Bildebene nach oben oder unten und nach links oder rechts oder in eine x- oder y-Richtung.

Jeder der Umlenkhebel 222, 224, 226 und 228 ist an einem jeweiligen Ende, das nicht mit dem dritten Bauteil 210 verbunden ist, jeweils mit einem zweiten Bauteil 250 gelenkartig verbunden. Dies wird durch teilweise verdeckte weitere Gelenke 213, 217 und 219 angedeutet. Diese Gelenke können in ähnlicher Weise wie die Gelenke 212, 214, 216 und 218 aus Paaren von Gelenkschnittstellen gebildet werden, wobei eine erste Gelenkschnittstelle jeweils an einem Umlenkhebel ausgebildet ist und eine zweite Gelenkschnittstelle an dem zweiten Bauteil 250 ausgebildet ist, wobei jeweilige erste und zweite Gelenkschnittstellen zusammen ein Gelenk bilden.

Ein viertes Gelenk ist in der gezeigten Draufsicht von dem Hebel 224 verdeckt. Das zweite Bauteil 250 ist näherungsweise zylinderförmig und durch einen in der gezeigten Draufsicht von dem dritten Bauteil 210 ein fast vollständig verdecktes Quadrat mit abgeschrägten Ecken angedeutet.

Die Anordnung der Gelenke 212, 214, 216 und 218 ist näherungsweise kongruent zu jeweils darunter liegenden Gelenken.

Jeder der Umlenkhebel 222, 224, 226 und 228 weist weiterhin einen Führungsfolgeabschnitt auf, der jeweils in einer entsprechenden Führung gelagert ist.

Der Umlenkhebel 224 weist dazu an einem unteren Ende einen Führungsfolgeabschnitt 234 auf. Dieser ist in einer Führung gelagert, die im Inneren des kreisringsegmentförmigen Elements 244 ausgebildet ist. Es kann sich dabei beispielsweise um eine in einer Führung laufende Kugel handeln. Diese Kugel ist in anderen Worten also in einer entsprechenden Gleitbahn beweglich gelagert. In der gezeigten Draufsicht ist die Führung jedoch nicht zu sehen, da sie im Inneren des Elements 244 ausgebildet ist.

In ähnlicher Weise mündet der gegenüberliegende Umlenkhebel 228 in einem Führungsfolgeabschnitt 238, der (gleitend) in einer Führung gelagert ist, die im inneren des Elements 248 ausgebildet ist.

Das Element 244 weist weiterhin drei äquidistant angeordnete Befestigungselemente 244a, 244b und 244c auf und das Element 248 drei äquidistant angeordnete Befestigungselemente 248a, 248b und 248c. Es kann sich beispielsweise um Schrauben handeln, wie es durch in der gezeigten Draufsicht erkennbare sechseckige Querschnitte angedeutet wird.

Die Befestigungselemente 244a-c und 248a-c fixieren die Elemente 244 und 248 an einem ringförmig dargestellten ersten Bauteil 260, dergestalt, dass bei sie bei einer Rotation des Bauteils 260 mitgedreht werden bzw. sich nicht bewegen, wenn das Bauteil 260 sich nicht bewegt.

Der Umlenkhebel 222 weist einen Führungsfolgeabschnitt 232 auf, der in einer entsprechenden Führung im Inneren des kreisringsegmentförmigen Abschnitts 242 ausgebildet ist und der gegenüberliegende Umlenkhebel 226 weist einen Führungsfolgeabschnitt 236 auf, der in einer innerhalb des Kreisringsegments 246 ausgebildeten Führung gelagert ist.

Das Element 242 weist weiterhin drei äquidistant angeordnete Befestigungselemente 242a, 242b und 242c auf und das Element 246 drei äquidistant angeordnete Befestigungselemente 246a, 246b und 246c.

Es kann sich hierbei wieder um Schrauben handeln. Diese sind ausgebildet, um die Elemente 242 und 246, die jeweils aus zwei Einzelelementen aufgebaut sein können, zusammen zu halten. Der Aufbau jeweils aus zwei Einzelelementen kann beispielsweise sinnvoll sein, um jeweilige Führungen ausbilden zu können , oder um jeweilige Führungsfolgeabschnitte in den jeweiligen Führungen lagern zu können. Einem ähnlichen Zweck können die Befestigungselemente 244a-c und 248a-c beispielsweise ebenfalls dienen.

Die Befestigungselemente 242a-c und 246a-c sind jedoch nicht ausgebildet, um die Elemente 242 und 246 an dem ersten Bauteil 260 zu fixieren.

Stattdessen sind die Elemente 242 und 246 an einem exemplarisch hohlzylinderförmigen vierten Bauteil 270 befestigt. Das Bauteil 270 wird in der gezeigten Ansicht durch einen zum Bauteil 260 konzentrischen Ring gebildet.

Dazu weist das Element 242 teilweise verdeckte Befestigungselemente 243a, 243b und 243c auf und das Element 246 gegenüberliegend angeordnete teilweise verdeckte Befestigungselemente 247a, 247b und 247c.

Das vierte Bauteil 270 einerseits und das erste Bauteil 260 andererseits sind durch eine geeignete Lagerung, beispielsweise an dem zweiten Bauteil 250, gegeneinander um eine gemeinsame Mittel- oder Rotationsachse verdrehbar ausgebildet. Weiterhin sind beide Bauteile 260 und 270 einzeln oder gemeinsam gegen das zweite Bauteil 250 verdrehbar ausgebildet, woraus eine translatorische Bewegung des dritten Bauteils 220 resultieren kann.

Bei der soeben erläuterten Konfiguration der Bauteile kann der Manipulator 200 weiterhin eine Verdreheinschränkung aufweisen, so dass die Bauteile gegeneinander maximal um einen Verdrehwinkel, der beispielsweise zwischen 30° und 60° liegt, verdrehbar sind.

Des Weiteren in der Fig. 2a zu sehen ist eine Schnittachse 240, die zunächst von oben kommend das Gelenk 218 etwas links von der Mitte und das Gelenk 219 näherungsweise mittig durchschneidet. Die Schnittachse 240 verläuft daraufhin weiterhin gerade, durchschneidet den Werkstückträger 210 leicht von seiner Mitte versetzt und knickt dann senkrecht nach links ab, um anschließend in einem Winkel von ca. 30° zur Vertikalen den Führungsfolgeabschnitts 234 sowie das Kreisringsegment 244 näherungsweise mittig zu durchschneiden.

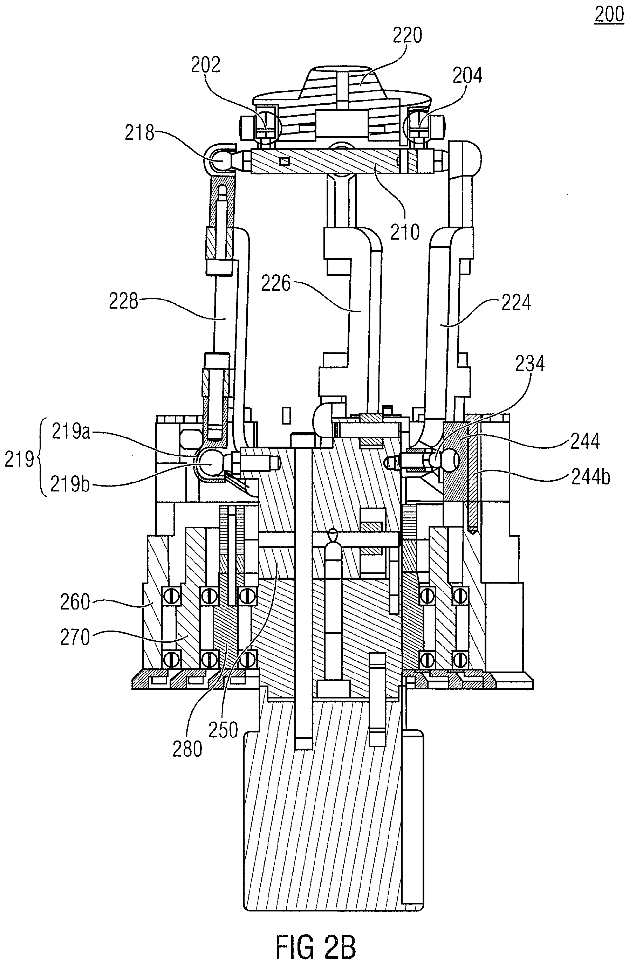

Fig. 2b zeigt das entstehende Schnittbild in einer Seitenansicht.

In einem linken oberen Bereich der Fig. 2b zu sehen ist nun also ein Schnitt durch näherungsweise die Mitte des Gelenkes 218. Es ist erkennbar, dass es sich um ein Kugelgelenk handeln kann, wobei ein als Gelenkschnittstelle ausgebildeter Gelenkkopf an dem dritten Bauteil 210 befestigt ist und eine als Gelenkschnittstelle ausgebildete Gelenkpfanne an dem Umlenkhebel 228, und wobei der Gelenkkopf und die Gelenkpfanne paarweise das Gelenk bilden. Auf vergleichbare Weise bilden auch an den anderen Umlenkhebeln 222, 224 und 226 Gelenkschnittstellen paarweise Gelenke 212, 214 und 216.

Der Umlenkhebel 228 ist über eine Gelenkschnittstelle 219a, die ebenfalls geschnitten zu sehen ist, mit einer weiteren Gelenkschnittstelle 219b des zweiten Bauteils 250 gelenkartig verbunden. Dieses Paar von Gelenkschnittstellen bildet ein Gelenk 219. In ähnlicher Weise sind die anderen Umlenkhebel 222, 224 und 226 exemplarisch gelenkartig (bspw. über Gelenke 213 und 217) mit dem zweiten Bauteil 250 verbunden. Das zweite Bauteil 250 kann weiterhin vereinfachend als ortsfest gegenüber einer Rotationsbewegung betrachtet werden.

In einem rechten Bereich der Fig. 2b ist nun ein annähernd mittig ausgeführter Schnitt durch das Teilelement 244 zu sehen. Dargestellt ist, wie der Führungsfolgeabschnitt 234 in einer in dem Element 244 ausgebildeten Führung, die beispielsweise an eine schlauchförmige Bahn erinnert, gelagert sein könnte. Diese Führung 244 ist in dem ersten Bauteils 260 ausgebildet. Da der Umlenkhebel 224 auf ähnliche Weise wie der Umlenkhebel 228 an dem zweiten Bauteil 250 gelagert ist, kann aus einer Rotation des ersten Bauteils 260 gegen das zylinderförmige zweite Bauteil 250 eine Bewegung der Hebel 224 und 228 und damit durch die mechanische Verbundenheit auch der Hebel 222 und 226 resultieren. Dadurch kann sich das dritte Bauteil 210 und auch das sechste Bauteil 220 translatorisch bewegen. Das zweite Bauteil 250 kann beispielsweise durch eine mechanische Befestigung an einem Rotor, der bei einem Ausführungsbeispiel einen Drehteller eines industriellen Computertomographie-Untersuchungsgeräts umfassen kann, um eine Rotationsachse um sich selber drehen, während das erste Bauteil 260 durch eine Koppelvorrichtung temporär fixiert wird, oder andersherum. Auf ähnliche Weise kann bspw. das vierte Bauteil 270 gegen das zweite Bauteil 250 verdreht werden.

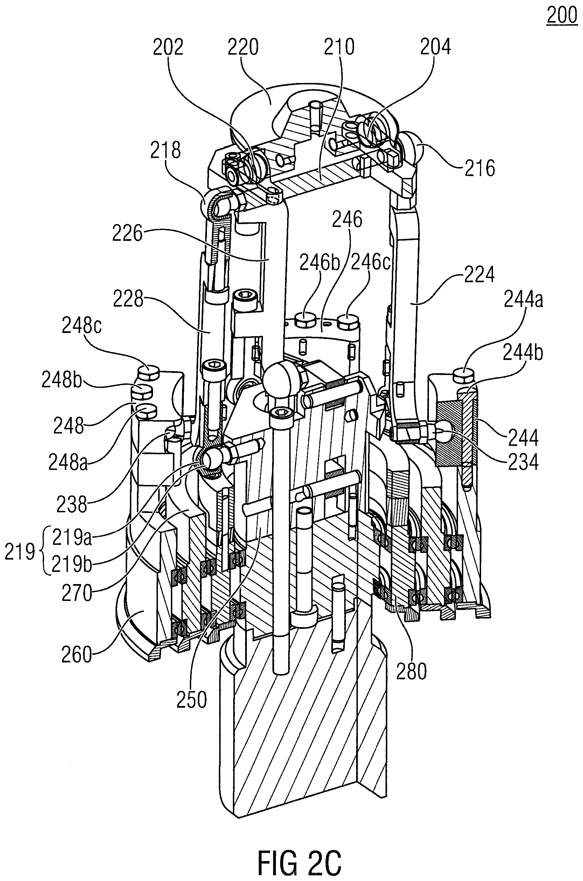

Fig. 2c zeigt schließlich eine schematische perspektivische Ansicht des Manipulators 200, der entlang der Schnittachse 240 (siehe Fig. 2a) durchschnitten ist.

In dieser Ansicht ist zu erkennen, dass die Bauteile 260 und 270 näherungsweise durch jeweilige Hohlzylinder gebildet werden, die jeweils konzentrisch zu dem näherungsweise zylinderförmigen Bauteil 250 angeordnet sind. Ein ebenfalls konzentrisch angeordnetes fünftes Bauteil 280 wird exemplarisch durch einen Hohlzylinder mit einem kleineren Radius gebildet. Ein Hohlzylinder kann dabei vereinfachend auch als Ring bezeichnet werden.

Zu sehen ist weiterhin das dritte Bauteil 210, das mit dem Gelenk 218 gelenkartig an dem Umlenkhebel 228 befestigt ist. Rechts ist der ähnliche konfigurierte Umlenkhebel 224 in Verbindung mit dem Gelenk 216 sowie im Hintergrund der Umlenkhebel 226 zu sehen.

Die gelenkartige Verbindung des Umlenkhebels 228 mit dem zweiten Bauteil 250 ist nun ebenfalls wie in der Fig. 2b im Schnitt dargestellt. Der Führungsfolgeabschnitt 238 ist in einer Führung gelagert, die in dem ersten Bauteils 260 gebildet ist.

In einem rechten Bereich der Fig. 2c ist erkennbar, dass der Führungsfolgeabschnitt 234 in einer Führung oder Führungsbahn im Inneren des Elements 244 gelagert ist. Die entsprechende gelenkartige Verbindung mit dem zweiten Bauteil 250 über das Gelenk 217 ist in der Zeichnung wiederum aufgrund der Perspektive verdeckt.

Sowohl das Kreisringsegment 248 als auch das Kreisringsegment 244 sind exemplarisch in dem ersten Bauteils 260 ausgebildet. Entsprechende Führungen, in denen jeweilige Führungsfolgeabschnitte 234 und 238 gelagert sind, erstrecken sich exemplarisch entlang zueinander rotationssymmetrischer an der Mittelachse bzw. Rotationsachse gespiegelten Trajektorien. Das erste Bauteil 260 ist ausgebildet, um sich beispielsweise gegen das zweite Bauteil 250 zu verdrehen. Hieraus resultiert beispielsweise eine translatorische Bewegung des dritten Bauteils 210 in eine erste Richtung, die z. B. lotrecht zu der flächenmäßig größeren Schnittfläche des zweiten Bauteils 250 verläuft.

Weiterhin in der Fig. 2c zu sehen ist das vierte Bauteil 270, das exemplarisch durch einen bezüglich des ebenfalls hohlzylinderförmigen ersten Bauteils 260 konzentrischen zweiten Hohlzylinder 270 gebildet ist. Das vierte Bauteil 270 kann aufgrund der Anordnung zwischen den ringförmigen Bauteilen 260 und 280 auch als mittlerer Ring bezeichnet werden. Das vierte Bauteil 270 weist bzgl. den Führungen im ersten Bauteil 260 ähnlich konfigurierte Führungen auf, die jeweils gegenüberliegend und rotationssymmetrisch ausgeführt sind. In diesen sind Führungsfolgeabschnitte der Umlenkhebel 226 und 222 gelagert.

Diese ermöglichen eine translatorische Bewegung des dritten Bauteils 210 in eine zweite Richtung, die näherungsweise orthogonal zu der ersten Richtung verläuft.

Die Bewegung in die zweite Richtung kann dabei möglicherweise unabhängig von der Bewegung in die erste Richtung, die bspw. aus einem Verdrehen des ersten Bauteils 260 gegen das zweite Bauteil 250 resultiert, erfolgen.

Die gezeigte Konstruktion ermöglicht in anderen Worten ein Verdrehen des ersten Bauteils 260 gegen das zweite Bauteil 250 und des vierten Bauteils 270 gegen das zweite Bauteil 250. Dies kann unabhängig voneinander erfolgen oder beispielsweise auch zusammen.

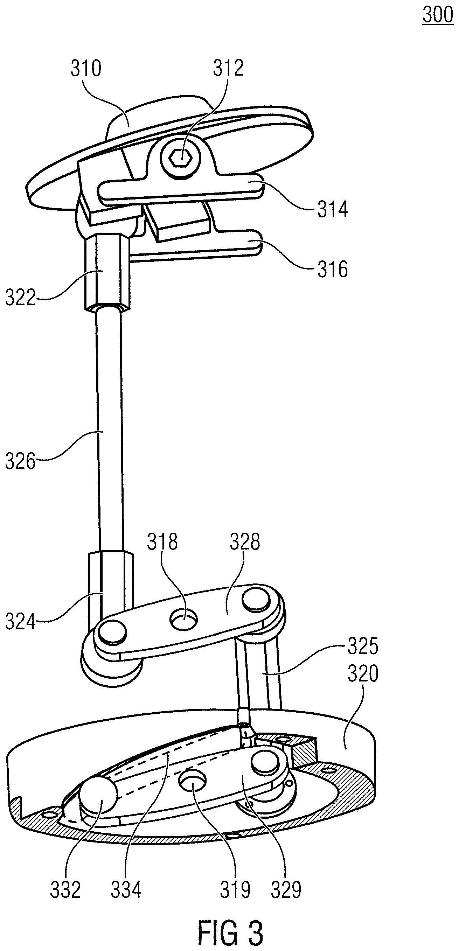

Das in der Fig. 2c schematisch durch einen Hohlzylinder dargestellte fünfte Bauteil 280 ist beispielsweise zur Ansteuerung des sechsten Bauteils 220 ausgebildet. Mit dem Bauteil 280 kann also, wenn es gegen die anderen Bauteile 260 und 270 oder gegen das zweite Bauteil 250 oder gegen alle drei Bauteile 250, 260 und 270 verdreht wird, ein Kippen des kippbar an dem dritten Bauteil 210 gelagerten sechsten Bauteils 220 ermöglicht werden. Die Hebelmechanik der Kippfunktion ist aus Gründen der Anschaulichkeit nicht eingezeichnet. Sie wird in der Fig. 3 schematisch gezeigt.

Fig. 2d zeigt eine perspektivische Darstellung eines modifizierten beispielhaften Manipulators 200' mit einem Computertomographie-Untersuchungsgerät. Letzteres ist dabei lediglich angedeutet.

Der Manipulator 200' ist eine vorteilhafte Implementierungsmöglichkeit eines erfindungsgemäßen Manipulators. Der Manipulator 200' weist exemplarisch Elemente oder zusätzliche Bauteile auf, die beispielsweise ausgebildet sind, um eine mechanische Stabilität zu erhöhen, um eine Kopplung zu anderen Vorrichtungen zu ermöglichen, oder um dem eingangs skizzierten Grundkonzept weitere Freiheitsgrade hinzuzufügen. Gleichwohl sei angemerkt, dass die folgenden Erläuterungen sinngemäß auch auf Elemente des Manipulators 100 (siehe Fig. 1) anwendbar sind, insbesondere, insofern sie sich auf ein erstes, zweites oder drittes (oder viertes) Bauteil oder jegliche Umlenkhebel, Gelenkschnittstellen, Führungen oder Führungsfolgeabschnitte beziehen.

Der Manipulator 200' weist im Unterschied zum Manipulator 200 ein anders ausgeformtes sechstes Bauteil 220' auf. Weiterhin ist ein Kipphebel 227 erkennbar, der ausgebildet ist, um das sechste Bauteil 220' (bspw. aus einer Gelenkebene heraus) zu kippen. Dieser Kipphebel 227 weist ein an dem zweiten Bauteil 250 gelagertes Gestänge auf, das von einer Gelenkschnittstelle des sechsten Bauteils 220' aus in einem Führungsfolgeabschnitt mündet, der in einer Führung gelagert ist, die in dem fünften Bauteils 280 ausgebildet ist, wobei das fünfte Bauteil 280 und das zweite Bauteil 250 durch eine Rotationsbewegung gegeneinander um eine Rotationsachse verdrehbar sind, wodurch das sechste Bauteil 220' durch eine Führung des Führungsfolgeabschnitts in der Führung um eine Kippachse, die in einer zweiten Gelenkebene liegt, in der bspw. Gelenke bzw. Gelenkschnittstellen 212 und 214 angeordnet sind, gekippt wird.

Das an dem Werkstückträger 210 entlang der Kippachse kippbar gelagerte sechste Bauteil 220' wird exemplarisch durch einen flachen Quader mit abgeflachten Ecken gebildet und ist vergleichbar dem sechsten Bauteil 220 (siehe Figuren 2a-c) an Gelenken befestigt (die wieder aus Paaren von Gelenkschnittstellen gebildet sein können), wobei aufgrund der Perspektive nur das Gelenk 202 zu sehen ist. Das sechste Bauteil 220' ist in der gezeigten Stellung leicht aus einer exemplarisch durch die Gelenke 212, 214, 216 und 218 definierten Gelenkebene heraus gekippt.

Der Manipulator 200' befindet sich auf einem Drehteller 290, der bspw. ein Teil des CT-Untersuchungsgeräts sein kann und exemplarisch ausgebildet ist, um ein darauf platziertes Objekt (etwa im Rahmen einer CT-Untersuchung) um die eigene Achse zu drehen.

Das in der Darstellung nicht gezeigte zylinderförmige zweite Bauteil 250 ist exemplarisch an dem Drehteller 290 fixiert, dergestalt, dass bei einer Drehung des Drehtellers 290 zumindest das Bauteil 250 mitgedreht wird.

Die Bauteile 250, 260, 270, 280 und 290 sind in anderen Worten exemplarisch (ver-) drehbar um eine (gemeinsame) Mittel- oder Rotationsachse gelagert.

In der gezeigten Darstellung ist weiterhin eine beispielhafte Koppelvorrichtung zu sehen. Diese besteht aus drei Kopplern 292, 294 und 296. Diese sind jeweils ausgebildet, um in eines der Bauteil 260, 270 oder 280 über eine entsprechende Kupplung einzurasten und diesen festzuhalten, wodurch mithin eine temporäre Verbindung zu einem Gehäuse der Drehachse des CT-Geräts hergestellt sein kann. Ein entsprechend festgehaltenes oder fixiertes Bauteil 260, 270 oder 280 wird bei einer Drehung des Drehtellers 290 also nicht mitgedreht.

Wird beispielsweise das erste Bauteil (bzw. der äußere Ring) 260 festgehalten, während der Drehteller 290 um die Rotationsachse rotiert wird, so werden das erste Bauteil 260 einerseits und das zweite Bauteil 250 (und die Bauteile 270 und 280) andererseits gegeneinander verdreht. Somit kann ein erster Freiheitsgrad definiert sein.

Wird beispielsweise das vierte Bauteil (bzw. der mittlere Ring) 270 festgehalten, während der Drehteller 290 um die Rotationsachse rotiert wird, so werden das vierte Bauteil 270 einerseits und das zweite Bauteil 250 (und die Bauteile 260 und 280) andererseits gegeneinander verdreht. Somit kann ein zweiter Freiheitsgrad definiert sein.

Wird beispielsweise das fünfte Bauteil (bzw. der innere Ring) 280 festgehalten, während der Drehteller 290 um die Rotationsachse rotiert wird, so werden das fünfte Bauteil 280 einerseits und das zweite Bauteil 250 (und die Bauteile 260 und 270) andererseits gegeneinander verdreht. Somit kann ein dritter Freiheitsgrad definiert sein.

Alternativ können Freiheitsgrade aus einer beliebigen Verdrehung beliebiger Bauteile 250, 260, 270 und 280 gegeneinander definiert werden.

Eine alternative Koppelvorrichtung kann beispielsweise (zusätzlich) ausgebildet sein, um den Drehteller 290 (und somit das Bauteil 250) von einer Antriebsachse des CT-Geräts zu entkoppeln, so dass sich keines der Bauteile dreht oder sich keine Bauteile gegeneinander verdrehen.

In anderen Worten handelt es sich bei dem Manipulator 200', der auch als "Spidermover 3-14" bezeichnet werden kann, beispielsweise um eine vollmechanische Manipulationseinheit zur Bauteilausrichtung in Computertomographen. Diese Manipulationseinheit zum Einsatz in Industrie-Computertomographen kommt ohne elektrische Verbindung aus. Zum Antrieb der Verfahrbewegung werden die bereits vorhandenen Maschinenachsen genutzt. Dazu wird vom Gehäuse der Drehachse zur Einheit eine temporäre mechanische Verbindung hergestellt. Eine X/Y-Kinematik auf Basis einer Parallelführung wird von in Gleitbahnen (Trajektorien) laufenden Kugeln angesteuert, was auch als Trajektoriensteuerung bezeichnet werden kann. Zusätzlich ist eine Kippfunktion integriert. Die drei Freiheitsgrade agieren voneinander unabhängig. Durch eine solche Parallelführungskinematik wird beispielsweise eine hohe Steifigkeit und ein weiter Verfahrensweg bei geringem Bauraum erreicht.

Des Weiteren kann eine grobe Ausrichtung eines Messobjekts die Aufgabe des Bedieners bleiben. Dies ist im Allgemeinen bedenkenlos zumutbar, schließlich muss sich dieser bereits vor der Aufspannung eine geeignete Ausrichtung in Bezug auf die maximale Durchstrahlungslänge überlegen. Auch in Bezug auf die Neigung ist es dem Bediener wiederum zumutbar, bereits beim Aufspannen eine Grobausrichtung zuzunehmen.

Eine Feinausrichtung des Werkstückträgers bzw. eines daran befestigten (aufgespannten) zu prüfenden Objekts kann nun jedoch (auch ohne händisches Umspannen) erfolgen, ohne das der Werkstückträger in die CT-Anlage eingesetzt wird, der Drehteller auf Position gefahren, die Röntgenquelle hochgefahren und das Durchstrahlungsbild überprüft wird, indem das Bauteil einmal um die eigene Achse gedreht wird. Diese manuelle iterative Feinausrichtung durch den Bediener hat sich bisher in der Praxis häufig als enorm zeitraubend herausgestellt. Dabei durfte die von der Drehachse am weitesten entfernte Kante des Werkstücks nicht über den Bildbereich hinauswandern. Tat sie das oder taumelte das Werkstück noch zu stark, musste der Bediener den Werkstückträger wieder entnehmen und das Werkstück neu aufspannen. Der Zeitbedarf für solch eine manuelle Korrektur der Werkstückaufspannung betrug typischerweise etwa fünf Minuten, wobei auch ein gewisses Maß an Erfahrung des Maschinenbedieners notwendig sein konnte. Dieser iterative Prozess wird dem Bediener durch die Verwendung des (automatisierten) Manipulators abgenommen.

Die Wirkung des Manipulators 200' besteht in anderen Worten darin, dass die Aufspannung eines in die abgeschlossene Maschine eingelegten Messobjekts von außen nachträglich verändert werden kann. Durch Vorhandensein des Manipulators 200' wird der darauffolgende Messablauf möglicherweise nicht gestört, da keine Verbindung (mehr) durch die Drehachse hindurch gelegt werden muss. Bei schlechter Aufspannung muss der Bediener die Korrektur nicht mehr manuell vornehmen. Er kann die Positionierung fortan von außen ändern.

Alternativ kann der Manipulator beispielsweise auch zur Messobjektpositionierung- oder Ausrichtung bei einem Oberflächenscanner mit Drehachse ausgebildet sein.

Fig. 3 zeigt ein beispielhaftes fünftes und sechstes Bauteil mit einem Gestänge, die zusammen eine sinnbildliche Kipphebelmechanik 300 bilden.

Erläuterungen, die sich beispielsweise auf ein zweites oder drittes Bauteil beziehen, können wiederum sinngemäß auch auf entsprechende zweite oder dritte Bauteile der Manipulatoren 100 (siehe Fig. 1), 200 oder 200' (siehe Figuren 2a bis 2d) angewendet werden.

Dargestellt ist ein sechstes Bauteil 310, bei dem es sich beispielsweise um einen Träger handeln kann, der auch eine Vorrichtung zum Auf- oder Einspannen eines (Mess-)Objekts aufweisen kann.

Es sind zwei Lager 314 und 316 angedeutet, die mit einem Kipphebel 326 gelenkartig verbunden sind. Es kann sich beispielsweise um Wälz- oder Gleitlager handeln. Die Lager 314 und 316 definieren exemplarisch eine (gedachte) Kippachse 312, an der das Bauteil 310 gekippt werden kann. Die Kippachse 312 verläuft in die Zeichenebene hinein.

An den exemplarisch unten abgeflacht ausgebildeten Lagern 314 und 316 kann das sechste Bauteil 310 beispielsweise kippbar an einem dritten Bauteil gelagert sein, wobei letzteres in einer Ruhestellung näherungsweise horizontal ausgerichtet sein kann. Das sechste Bauteil 310 könnte dann beispielsweise aus einer durch das dritte Bauteil definierten Ebene oder in Ruhestellung aus der Horizontalen herausgekippt werden.

Der Kipphebel 326 ist oben über eine Gelenkschnittstelle 322 mit dem Bauteil 310 verbunden und unten über eine Gelenkschnittstelle 324 mit einem Kippelement 328 verbunden. Dazu weist das sechste Bauteil 310 eine Gelenkschnittstelle auf, wobei es sich beispielsweise um eine Gelenkpfanne oder einen Gelenkkopf handeln kann, und der Kipphebel 326 weist entsprechende Gelenkschnittstellen auf, wobei Gelenkschnittstellen wiederum paarweise jeweilige Gelenke bilden.

Das Kippelement 328 weist ein kreisförmiges Loch 318 auf, das beispielsweise zur Aufnahme eines Stiftes ausgebildet sein kann. Dieser Stift könnte an einem zweiten Bauteil befestigt und in einer entsprechenden ersten Gelenkebene angeordnet sein, dergestalt, dass das Kippelement 328 an dem Stift drehbar gelagert ist.

Das Kippelement 328 ist über einen weiteren Hebel 325 mit einem weiteren Kippelement 329 gelenkartig verbunden, dergestalt, dass an einem ersten Ende des Hebels 325 eine erste Gelenkschnittstelle mit einer Gelenkschnittstelle an einem Ende des Kippelements 328, das nicht gelenkartig mit dem Kipphebel 326 verbunden ist, paarweise ein Gelenk bildet und an einem zweiten Ende des Hebels 325 eine zweite Gelenkschnittstelle mit einer Gelenkschnittstelle des weiteren Kippelements 329 paarweise ein Gelenk bildet. Es kann sich beispielsweise wieder um Kugelgelenke handeln.

Das Kippelement 329 ist ähnlich dem Kippelement 328 ausgebildet. Wiederum mittig angeordnet ist ein Loch 319.

Das Loch 319 kann ebenfalls ausgebildet sein, um einen Stift aufzunehmen. Dieser Stift könnte ebenfalls an einem zweiten Bauteil gelagert sein. Alternativ handelt es sich um ein geeignetes Lager.

Sowohl das Loch 318 als auch das Loch 319 können in anderen Worten beweglich an geeigneten Stiften gelagert sein, einzeln oder auch gleichzeitig. Die Stifte sind beispielsweise an einem zweiten Bauteil angeordnet, dergestalt, dass sie bei einer Drehung des zweiten Bauteils um eine Rotations- oder Drehachse mitgedreht werden.

Die Hebel 325 und 326, das Gelenk 324 und die Kippelemente 328 und 329 können (zusammen) auch als Gestänge bezeichnet werden. Es wäre ebenfalls denkbar, ein Gestänge anders aufzubauen, beispielsweise mit einem anders ausgeformten Kippelement, oder mit einem anders gelagerten Kippelement, oder mit einem anders ausgeformten Kipphebel, oder mit anders ausgeformten Gelenken bzw. Gelenkschnittstellen, oder beispielweise auch mit weniger (oder mehr) Kippelementen, Kipphebeln oder Gelenkschnittstellen. Alternativ kann ein an einem zweiten Bauteil gelagertes Gestänge von einer Gelenkschnittstelle eines sechsten Bauteils aus in einen Führungsfolgeabschnitt münden, der in einer Führung gelagert ist, die in dem fünften Bauteil ausgebildet ist, das zentriert zu der Rotationsache angeordnet ist.

Das Kippelement 329 weist an einem Ende, das nicht gelenkartig mit dem Hebel 325 verbunden ist, einen Führungsfolgeabschnitt 332 auf, der in einer Führung 334 gelagert ist. Die Führung 334 ist dabei in dem fünften Bauteils 320 ausgebildet. Das Bauteil 320 weist dabei aus anschaulichen Gründen auf der dem Betrachter zugewandten Seite eine Aussparung auf, so dass die innere Mechanik erkennbar ist. Der Umriss der Führung 334 ist daher in einem unteren Bereich gestrichelt gezeichnet.

Ein Verdrehen des fünften Bauteils 320 z. B. gegen ein zweites Bauteil, das wiederum als ortsfest (bezüglich der Rotationsbewegung) betrachtet werden kann, ermöglicht durch eine Lagerung des Stifts in dem Loch 318 (oder eines weiteren Stifts in dem Loch 319) eine translatorische (in der Zeichenebene näherungsweise nach oben bzw. unten) Bewegung des Hebels 326. Diese translatorische Bewegung führt in Folge der Lagerung an den Lagern 314 und 316 zu einem Kippen des Bauteils 310 (beispielsweise aus der der Horizontalen heraus). Die gezeigte Hebelmechanik 300 kann möglicherweise in den Manipulator 200 oder 200' (siehe Figuren 2a bis 2d) integriert werden, dergestalt, dass ein (dritter) Freiheitsgrad zum Ausrichten des sechsten Bauteils 310 und mithin eines Messobjekts definiert ist. Ebenso kann ein Manipulator 100 (siehe Fig. 1) möglicherweise zusätzlich ein entsprechend konfiguriertes fünftes oder sechstes Bauteil aufweisen.

In anderen Worten zeigt die Fig. 3 einen Teil eines Manipulators, mit einem fünften Bauteil 320, das zylindrisch geformt und zentriert zu der Rotationsachse angeordnet ist, wobei eine Führung 334 in dem fünften Bauteils 320 gebildet ist, wobei ein drittes Bauteil eine (bspw. durch die Lager 314 und 316 definierte) Kippachse 312 in einer zweiten Gelenkebene aufweist, an der ein sechstes Bauteil 310 kippbar an einem dritten Bauteil gelagert ist, wobei ein an einem zweiten Bauteil gelagertes Gestänge von einer Gelenkschnittstelle 322 des sechsten Bauteils 310 aus in einen Führungsfolgeabschnitt 332 mündet, der in der Führung 334 gelagert ist, wobei das fünfte Bauteil 320 und das zweite Bauteil durch eine Rotationsbewegung gegeneinander um die Rotationsache verdrehbar sind, wodurch das sechste Bauteil 310 durch eine Führung des Führungsfolgeabschnitts 332 in der Führung 334 um die Kippachse 312 gekippt wird.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Manipulator (100; 200, 200') zur Erzeugung einer Translationsbewegung aus einer Rotationsbewegung, mit einem ersten Bauteil (130; 260), in dem eine erste Führung (162) gebildet ist, die sich entlang einer Trajektorie (162') erstreckt, die im Wesentlichen einer zu einer Rotationsachse des ersten Bauteils hin gekrümmten Kurve entspricht, die schräg zu einer Ebene senkrecht zu der Rotationsachse (RA) und schräg zu jeglichen Ebenen, die die Rotationsachse enthalten, verläuft;
    einem zweiten Bauteil (120; 250) mit zumindest drei ersten Gelenkschnittstellen (142b, 144b, 146b, 148b; 213, 217, 219) in einer ersten Gelenkebene (131);
    einem dritten Bauteil (110; 210) mit zumindest drei zweiten Gelenkschnittstellen (122b, 124b, 126b, 128b; 212, 214, 216, 218) in einer zweiten Gelenkebene (121), wobei die zumindest drei ersten Gelenkschnittstellen und die zumindest drei zweiten Gelenkschnittstellen in einer zueinander kongruenten Weise angeordnet sind und die erste und die zweite Gelenkebene zueinander parallel sind; und
    zumindest drei Umlenkhebeln (112, 114, 116, 118; 222, 224, 226, 228), die jeweils mit einer dritten Gelenkschnittstelle (142a, 144a, 146a, 148a) mit einer jeweiligen der zumindest drei ersten Gelenkschnittstellen (142b, 144b, 146b, 148b) und jeweils mit einer vierten Gelenkschnittstelle (122a, 124a, 126a, 128a) mit einer jeweiligen der zumindest drei zweiten Gelenkschnittstellen (122b, 124b, 126b, 128b) gelenkartig verbunden sind, wobei ein erster der Umlenkhebel (112) einen ersten Führungsfolgeabschnitt (152) aufweist, der in der ersten Führung (162) gelagert ist; wobei der Manipulator so ausgebildet ist, dass das erste Bauteil (130) und das zweite Bauteil (120) durch die Rotationsbewegung gegeneinander um die Rotationsachse (RA) verdrehbar sind, wodurch das dritte Bauteil (110) durch eine Führung des ersten Führungsfolgeabschnitts (152) in der ersten Führung (162) translatorisch bewegt wird.

2.  Manipulator gemäß Anspruch 1, bei dem eine erste gegenüberliegende Führung (166) in dem ersten Bauteil (130) gebildet ist, die sich darin entlang einer Trajektorie (166') erstreckt, die durch eine Rotation um die Rotationsachse oder eine Spiegelung an der Rotationsachse in die Trajektorie (162') der ersten Führung (162) überführbar ist.

3.  Manipulator gemäß Anspruch 1 oder 2, mit einer Koppelvorrichtung (292, 294, 296),
    die in einen ersten Modus schaltbar ist, bei dem ein die Rotationsbewegung definierender Rotor (290) mit dem ersten Bauteil (260) und dem zweiten Bauteil (250) gekoppelt ist, so dass sich das erste Bauteil und das zweite Bauteil nicht gegeneinander verdrehen und sich das erste, zweite und dritte Bauteil (210) mit dem Rotor drehen, und die in einen zweiten Modus schaltbar ist, bei dem der die Rotationsbewegung definierende Rotor entweder von dem ersten Bauteil (260) oder von dem zweiten Bauteil (250) entkoppelt ist, so dass sich das erste Bauteil und das zweite Bauteil gegeneinander verdrehen.

4.  Manipulator einem der vorhergehenden Ansprüche, mit einem vierten Bauteil (140; 270), das gegenüber dem zweiten Bauteil um die Rotationsachse verdrehbar angeordnet ist, wobei eine zweite Führung (164) in dem vierten Bauteil (140) gebildet ist, die sich entlang einer Trajektorie (164') erstreckt, die im Wesentlichen einer zu einer Rotationsachse des ersten Bauteils hin gekrümmten Kurve entspricht, die schräg zu der Ebene senkrecht zu der Rotationsachse (RA) und schräg zu den jeglichen Ebenen, die die Rotationsachse enthalten, verläuft, wobei ein zweiter der Umlenkhebel (114) einen zweiten Führungsfolgeabschnitt (154) aufweist, der in der zweiten Führung (164) gelagert ist, wobei das zweite Bauteil (120) und das vierte Bauteil (140) durch die Rotationsbewegung gegeneinander um die Rotationsache (RA) verdrehbar sind, wodurch das dritte Bauteil (110) durch eine Führung des zweiten Führungsfolgeabschnitts (154) in der zweiten Führung (164) translatorisch bewegt wird, wobei aus der Rotationsbewegung des ersten Bauteils (130) und des zweiten Bauteils (120) gegeneinander eine Bewegung des dritten Bauteils (110) in eine erste Richtung (132, 134) und aus der Rotationsbewegung des vierten Bauteils (140)

und des zweiten Bauteils (120) gegeneinander eine Bewegung des dritten Bauteils in eine zweite Richtung (136, 138) resultiert.

5. Manipulator gemäß Anspruch 4, bei dem eine zweite gegenüberliegende Führung (168) in dem vierten Bauteil (140) gebildet ist und sich darin entlang einer Trajektorie (168') erstreckt, die durch eine Rotation um die Rotationsachse (RA) der eine Spiegelung an der Rotationsachse in die Trajektorie (164') der zweiten Führung (164) überführbar ist.

6. Manipulator gemäß Anspruch 4 oder 5, mit einer Koppelvorrichtung (292, 294, 296),
   die in einen ersten Modus schaltbar ist, bei dem ein die Rotationsbewegung definierender Rotor (290) mit dem ersten Bauteil (260), dem zweiten Bauteil (250) und dem vierten Bauteil (270) verkoppelt ist, so dass sich das erste Bauteil, das zweite Bauteil und das vierte Bauteil nicht gegeneinander verdrehen und sich das erste, zweite, dritte und vierte Bauteil mit dem Rotor drehen, und
   die in einen zweiten Modus schaltbar ist, bei dem der die Rotationsbewegung definierende Rotor von dem ersten Bauteil entkoppelt ist, so dass sich das erste Bauteil einerseits und das zweite und das vierte Bauteil andererseits gegeneinander verdrehen, und
   die in einen dritten Modus schaltbar ist, bei dem der die Rotationsbewegung definierende Rotor von dem vierten Bauteil entkoppelt ist, so dass sich das vierte Bauteil einerseits und das erste und das zweite Bauteil andererseits gegeneinander verdrehen.

7. Manipulator gemäß einem der vorhergehenden Ansprüche, mit einem fünften Bauteil (280, 320), das gegenüber dem zweiten Bauteil um die Rotationsachse verdrehbar angeordnet ist, wobei eine dritte Führung (334) in dem fünften Bauteil (320) gebildet ist, wobei das dritte Bauteil eine Kippachse (312) in der zweiten Gelenkebene aufweist, an der ein sechstes Bauteil (220; 310) kippbar an dem dritten Bauteil (210) gelagert ist, wobei ein an dem zweiten Bauteil gelagertes Gestänge (227; 325, 326, 328, 329) von einer Gelenkschnittstelle (322) des sechsten Bauteils (310) aus in einen dritten Führungsfolgeabschnitt (332) mündet, der in der dritten Führung (334) gelagert ist, wobei das fünfte Bauteil (320) und das zweite Bauteil durch die Rotationsbewegung gegeneinander um die Rotationsache verdrehbar sind, wodurch das sechste Bauteil (310) durch eine Führung des dritten Führungsfolgeabschnitts (332) in der dritten Führung (334) um die Kippachse (312) gekippt wird.

8. Manipulator gemäß Anspruch 7, bei dem das sechste Bauteil durch die Führung des dritten Führungsfolgeabschnitts in der dritten Führung um einen Kippwinkel, der zwischen 30° und 60° liegt, aus der zweiten Gelenkebene kippbar ist.

9. Manipulator gemäß Anspruch 7 oder 8, mit einer Koppelvorrichtung (292, 294, 296),
   die in einen ersten Modus schaltbar ist, bei dem ein die Rotationsbewegung definierender Rotor (290) mit dem ersten Bauteil (260), dem zweiten Bauteil (250), dem vierten Bauteil (270) und dem fünften Bauteil (280) verkoppelt ist, so dass sich das erste Bauteil, das zweite Bauteil, das vierte Bauteil und das fünfte Bauteil nicht gegeneinander verdrehen und sich das erste, zweite, dritte, vierte und fünfte Bauteil mit dem Rotor drehen, und
   die in einen zweiten Modus schaltbar ist, bei dem der die Rotationsbewegung definierende Rotor von dem ersten Bauteil entkoppelt ist, so dass sich das erste Bauteil einerseits und das zweite, das vierte und das fünfte Bauteil andererseits gegeneinander verdrehen, und
   die in einen dritten Modus schaltbar ist, bei dem der die Rotationsbewegung definierende Rotor von dem vierten Bauteil entkoppelt ist, so dass sich das vierte Bauteil einerseits und das erste, das zweite und das fünfte Bauteil andererseits gegeneinander verdrehen, und
   die in einen vierten Modus schaltbar ist, bei dem der die Rotationsbewegung definierende Rotor von dem fünften Bauteil entkoppelt ist, so dass sich das fünfte Bauteil einerseits und das erste, das zweite und das vierte Bauteil andererseits gegeneinander verdrehen.

10. Manipulator gemäß einem der vorhergehenden Ansprüche, der eine Verdreheinschränkung aufweist, so dass die Bauteile gegeneinander maximal um einen Verdrehwinkel, der zwischen 30° und 60° liegt, verdrehbar sind.

11. Manipulator (100; 200, 200') gemäß einem der vorhergehenden Ansprüche, der vier Umlenkhebel, vier erste Gelenke und vier zweite Gelenke aufweist, wobei die vier ersten Gelenke und die vier zweiten Gelenke jeweils an Ecken eines Quadrats (121, 131) angeordnet sind, das jeweils zentriert zur Rotationsachse (RA) ist.

12. Computertomographie-Untersuchungsgerät mit einem Manipulator (200') gemäß einem der vorhergehenden Ansprüche.

**Claims**

1. Manipulator (100; 200, 200') for generating a translational movement from a rotational movement, comprising a first component (130; 260) having a first guide (162) formed therein which extends along a trajectory (162') corresponding essentially to a curve bent toward a rotational axis of the first component, said curve extending obliquely in relation to a plane perpendicular to the rotational axis (RA) and obliquely in relation to any planes containing the rotational axis;

   a second component (120; 250) comprising at least three first hinge interfaces (142b, 144b, 146b, 148b; 213, 217, 219) within a first hinge plane (131);

   a third component (110; 210) comprising at least three second hinge interfaces (122b, 124b, 126b, 128b; 212, 214, 216, 218) within a second hinge plane (121), the at least three first hinge interfaces and the at least three second hinge interfaces being arranged in a mutually congruent manner, and the first and second hinge planes being mutually parallel; and

   at least three deflection levers (112, 114, 116, 118; 222, 224, 226, 228) which are connected, respectively, in an articulated manner to a respective one of the at least three first hinge interfaces (142b, 144b, 146b, 148b) via a third hinge interface (142a, 144a, 146a, 148a), and are connected, respectively, in an articulated manner to a respective one of the at least three second hinge interfaces (122b, 124b, 126b, 128b) via a fourth hinge interface (122a, 124a, 126a, 128a), a first one of the deflection levers (112) comprising a first guide follower portion (152) mounted within the first guide (162);

   the manipulator being configured such that the first component (130) and the second component (120) are twistable about the rotational axis (RA) against each other because of the rotational movement, whereby the third component (110) is translationally moved by being guided by the first guide follower portion (152) within the first guide (162).

2. Manipulator as claimed in claim 1, wherein a first opposite guide (166) is formed within the first component (130) and extends therein along a trajectory (166') which may be transferred into the trajectory (162') of the first guide (162) by means of rotation about the rotational axis or by means of mirroring on the rotational axis.

3. Manipulator as claimed in claim 1 or 2, comprising a coupling device (292, 294, 296),
   which may be switched into a first mode wherein a rotor (290) defining the rotational movement is coupled to the first component (260) and to the second component (250) so that the first component and the second component will not twist against each other and so that the first, second and third components (210) will rotate along with the rotor, and
   which may be switched into a second mode wherein the rotor defining the rotational movement is decoupled either from the first component (260) or from the second component (250) so that the first component and the second component will twist against each other.

4. Manipulator as claimed in any of the previous claims, comprising a fourth component (140; 270) which is arranged to be twistable about the rotational axis against the second component, a second guide (164) being formed within the fourth component (140) which extends along a trajectory (164') corresponding essentially to a curve bent toward a rotational axis of the first component, said curve extending obliquely in relation to the plane perpendicular to the rotational axis (RA) and obliquely in relation to any planes containing the rotational axis, a second one of the deflection levers (114) comprising a second guide follower portion (154) mounted within the second guide (164), the second component (120) and the fourth component (140) being twistable about the rotational axis (RA) against each other because of the rotational movement, whereby the third component (110) is translationally moved by being guided by the second guide follower portion (154) within the second guide (164), the rotational movements of the first component (130) and of the second component (120) against each other resulting in a movement of the third component (110) in a first direction (132, 134), and the rotational movements of the fourth component (140) and of the second component (120) against each other resulting in a movement of the third component in a second direction (136, 138).

5. Manipulator as claimed in claim 4, wherein a second opposite guide (168) is formed within the fourth component (140) and extends therein along a trajectory (168') which may be transferred into the trajectory (164') of the second guide (164) by means of rotation about the rotational axis (RA) or by means of mirroring on the rotational axis.

6. Manipulator as claimed in claim 4 or 5, comprising a coupling device (292, 294, 296),
   which may be switched into a first mode wherein a rotor (290) defining the rotational movement is coupled to the first component (260), the second component (250), and to the fourth component (270) so that the first component, the second component and the fourth component will not twist against one another and so that the first, second, third and fourth components will rotate along with the rotor, and

which may be switched into a second mode wherein the rotor defining the rotational movement is decoupled from the first component so that the first component, on the one hand, and the second and fourth components, on the other hand, will twist against one another, and

which may be switched into a third mode wherein the rotor defining the rotational movement is decoupled from the fourth component so that the fourth component, on the one hand, and the first and second components, on the other hand, will twist against one another.

7. Manipulator as claimed in any of the previous claims, comprising a fifth component (280, 320) which is arranged to be twistable about the rotational axis against the second component, a third guide (334) being formed within the fifth component (320), wherein the third component comprises a tilting axis (312) within the second hinge plane which has a sixth component (220; 310) tiltably mounted on the third component (210), wherein rods (227; 325, 326, 328, 329) lead from a hinge interface (322) of the sixth component (310) into a third guide follower portion (332) mounted within the third guide (334), the fifth component (320) and the second component being twistable about the rotational axis against each other because of the rotational movement, whereby the sixth component (310) is tilted about the tilting axis (312) by being guided by the third guide follower portion (332) within the third guide (334).

8. Manipulator as claimed in claim 7, wherein the sixth component is tiltable from the second hinge plane by a tilting angle ranging from 30° to 60° by being guided by the third guide follower portion within the third guide.

9. Manipulator as claimed in claim 7 or 8, comprising a coupling device (292, 294, 296),

which may be switched into a first mode wherein a rotor (290) defining the rotational movement is coupled to the first component (260), the second component (250), the fourth component (270), and to the fifth component (280) so that the first component, the second component, the fourth component, and the fifth component will not twist against one another and so that the first, second, third, fourth and fifth components will rotate along with the rotor, and

which may be switched into a second mode wherein the rotor defining the rotational movement is decoupled from the first component so that the first component, on the one hand, and the second, fourth and fifth components, on the other hand, will twist against one another, and

which may be switched into a third mode wherein the rotor defining the rotational movement is decoupled from the fourth component so that the fourth component, on the one hand, and the first, second and fifth components, on the other hand, will twist against one another, and

which may be switched into a fourth mode wherein the rotor defining the rotational movement is decoupled from the fifth component so that the fifth component, on the one hand, and the first, second and fourth components, on the other hand, will twist against one another.

10. Manipulator as claimed in any of the previous claims, comprising a twisting restriction, so that the components are twistable against one another by a maximum twisting angle ranging from 30° to 60°.

11. Manipulator (100; 200, 200') as claimed in any of the previous claims, comprising four deflection levers, four first hinges and four second hinges, the four first hinges and the four second hinges each being arranged at corners of a square (121, 131) centered toward the rotational axis (RA) in each case.

12. Computer tomography examination device comprising a manipulator (200') as claimed in any of the previous claims.

**Revendications**

1. Manipulateur (100; 200, 200') servant à générer un mouvement de translation à partir d'un mouvement de rotation, avec

un premier composant (130; 260) dans lequel est formé un premier guide (162) qui s'étend le long d'une trajectoire (162') qui correspond sensiblement à une courbe courbée vers un axe de rotation du premier composant, laquelle s'étend en oblique par rapport à un plan perpendiculaire à l'axe de rotation (RA) et en oblique par rapport à tous les plans qui contiennent l'axe de rotation;

un deuxième composant (120; 250) avec au moins trois premières interfaces d'articulation (142b, 144b, 146b, 148b; 213, 217, 219) dans un premier plan d'articulation (131);

un troisième composant (110; 210) avec au moins trois deuxièmes interfaces d'articulation (122b, 124b, 126b, 128b; 212, 214, 216, 218) dans un deuxième plan d'articulation (121), où les au moins trois premières interfaces d'articulation et les au moins trois deuxièmes interfaces d'articulation sont disposées de manière congruente entre elles et les premier et deuxième plans d'articulation sont parallèles l'un à l'autre; et

au moins trois leviers de renvoi (112, 114, 116, 118; 222, 224, 226, 228) qui sont, chacun, connectés de manière articulée par une troisième interface d'articulation (142a, 144a, 146a, 148a) à l'une respective des au moins trois premières interfaces d'articulation (142b, 144b, 146b, 148b) et, chacun, par une quatrième interface d'articulation (122a, 124a, 126a, 128a) à l'une respective des au moins trois deuxièmes interfaces d'articulation (122b, 124b, 126b, 128b), où un premier des leviers de renvoi (112) présente un premier segment suiveur de guidage (152) qui est monté dans le premier guide (162);

dans lequel le manipulateur est conçu de sorte que le premier composant (130) et le deuxième composant (120) puissent, par le mouvement, de rotation, tourner en sens contraire l'un par rapport à l'autre autour de l'axe de rotation (RA), d'où le troisième composant (110) est déplacé en translation par un guidage du premier segment suiveur de guidage (152) dans le premier guide (162).

2. Manipulateur selon la revendication 1, dans lequel est formé dans le premier composant (130) un premier guide opposé (166) qui s'y étend le long d'une trajectoire (166') qui peut être transformée, par une rotation autour de l'axe de rotation ou un miroitage sur l'axe de rotation, en la trajectoire (162') du premier guide (162).

3. Manipulateur selon la revendication 1 ou 2, avec un dispositif de couplage (292, 294, 296),

qui peut être commuté à un premier mode dans lequel un rotor (290) définissant le mouvement de rotation est couplé au premier composant (260) et au deuxième composant (250) de sorte que le premier composant et le deuxième composant ne tournent pas en sens opposé l'un par rapport à l'autre et que le premier, le deuxième et le troisième composant (210) tournent avec le rotor, et

qui peut être commuté à un deuxième mode dans lequel le rotor définissant le mouvement de rotation est découplé soit du premier composant (260), soit du deuxième composant (250), de sorte que le premier composant et le deuxième composant tournent en sens opposé l'un par rapport à l'autre.

4. Manipulateur selon l'une des revendications précédentes, avec un quatrième composant (140; 270) qui est disposé de manière à pouvoir tourner par rapport au deuxième composant autour de l'axe de rotation, dans lequel est formé dans le quatrième composant (140) un deuxième guide (164) qui s'étend le long d'une trajectoire (164') qui correspond sensiblement à une courbe courbée vers un axe de rotation du premier composant qui s'étend en oblique par rapport au plan perpendiculaire à l'axe de rotation (RA) et en oblique par rapport à tous les plans qui contiennent l'axe de rotation, dans lequel un deuxième des leviers de renvoi (114) présente un deuxième segment suiveur de guidage (154) qui est monté dans le deuxième guide (164), dans lequel le deuxième composant (120) et le quatrième composant (140) peuvent tourner par le mouvement de rotation en sens opposé l'un par rapport à l'autre autour de l'axe de rotation (RA), d'où le troisième composant (110) est déplacé en translation, par un guidage du deuxième segment suiveur de guidage (154), dans le deuxième guide (164), dans lequel résulte, du mouvement de rotation du premier composant (130) et du deuxième composant (120) en sens opposé l'un par rapport à l'autre, un déplacement du troisième composant (110) dans une première direction (132, 134) et, du mouvement de rotation du quatrième composant (140) et du deuxième composant (120) en sens opposé l'un par rapport à l'autre, un déplacement du troisième composant dans une deuxième direction (136, 138).

5. Manipulateur selon la revendication 4, dans lequel un deuxième guide opposé (168) est formé dans le quatrième composant (140) et s'y étend le long d'une trajectoire (168') qui peut être transformée, par une rotation autour de l'axe de rotation (RA) ou un miroitage à l'axe de rotation, en la trajectoire (164') du deuxième guide (164).

6. Manipulateur selon la revendication 4 ou 5, avec un dispositif de couplage (292, 294, 296),
qui peut être commuté à un premier mode dans lequel un rotor (290) définissant le mouvement de rotation est couplé au premier composant (260), au deuxième composant (250) et au quatrième composant (270), de sorte que le premier composant, le deuxième composant et le quatrième composant ne tournent pas en sens opposé l'un par rapport à l'autre et que le premier, le deuxième, le troisième et le quatrième composant tournent avec le rotor, et
qui peut être commuté à un deuxième mode, dans lequel le rotor définissant le mouvement de rotation est découplé du premier composant, de sorte que le premier composant, d'une part, et le deuxième et le quatrième composant, d'autre part, tournent en sens opposé l'un par rapport à l'autre, et
qui peut être commuté à un troisième mode dans lequel le rotor définissant le mouvement de rotation est découplé du quatrième composant, de sorte que le quatrième composant, d'une part, et le premier et le deuxième composant, d'autre part, tournent en sens opposé l'un par rapport à l'autre.

7. Manipulateur selon l'une des revendications précédentes, avec un cinquième composant (280, 320) qui est disposé de manière à pouvoir tourner par rapport au deuxième composant autour de l'axe de rotation, dans lequel un troisième guide (334) est formé dans le cinquième composant (320), dans lequel le troisième composant présente, dans le deuxième plan d'articulation, un axe de basculement (312) sur lequel un sixième composant (220; 310) est monté de manière à pouvoir basculer sur le troisième composant (210), dans lequel une tringle (227; 325, 326, 328, 329) montée sur le deuxième composant aboutit à partir d'une interface d'articulation (322) du sixième composant (310) dans un troisième segment suiveur de guidage (332) qui est monté dans le troisième guide (334), dans lequel le cinquième composant (320) et le deuxième composant peuvent, par le mouvement de rotation, tourner en sens contraire l'un par rapport à l'autre autour de l'axe de rotation, d'où le sixième composant (310) est basculé, par un guidage du troisième segment suiveur de guidage (332) dans le troisième guide (334), autour de l'axe de basculement (312).

8. Manipulateur selon la revendication 7, dans lequel le sixième composant peut, par le guidage du troisième segment suiveur de guidage dans le troisième guide selon un angle de basculement compris entre 30° et 60°, être basculé hors du deuxième plan d'articulation.

9. Manipulateur selon la revendication 7 ou 8, avec un dispositif de couplage (292, 294, 296),
qui peut être commuté à un premier mode dans lequel un rotor (290) définissant le mouvement de rotation est couplé au premier composant (260), au deuxième composant (250), au quatrième composant (270) et au cinquième composant (280), de sorte que le premier composant, le deuxième composant, le quatrième composant et le cinquième composant ne tournent pas en sens opposé l'un par rapport à l'autre et que le premier, le deuxième, le troisième, le quatrième et le cinquième composant tournent avec le rotor, et
qui peut être commuté à un deuxième mode dans lequel le rotor définissant le mouvement de rotation est découplé du premier composant, de sorte que le premier composant, d'une part, et le deuxième, le quatrième et le cinquième composant, d'autre part, tournent en sens opposé l'un par rapport à l'autre, et
qui peut être commuté à un troisième mode dans lequel le rotor définissant le mouvement de rotation est découplé du quatrième composant, de sorte que le quatrième composant, d'une part, et le premier, le deuxième et le cinquième composant, d'autre part, tournent en sens opposé l'un par rapport à l'autre, et
qui peut être commuté à un quatrième mode dans lequel le rotor définissant le mouvement de rotation est découplé du cinquième composant, de sorte que le cinquième composant, d'une part, et le premier, le deuxième et le quatrième composant, d'autre part, tournent en sens opposé l'un par rapport à l'autre.

10. Manipulateur selon l'une des revendications précédentes, qui présente une restriction de rotation, de sorte que les composants puissent tourner en sens opposé l'un par rapport à l'autre tout au plus selon un angle de rotation compris entre 30° et 60°.

11. Manipulateur (100; 200, 200') selon l'une des revendications précédentes, qui présente quatre leviers de renvoi, quatre premières articulations et quatre deuxièmes articulations, dans lequel les quatre premières articulations et les quatre deuxièmes articulations sont disposées, chacune, aux coins d'un carré (121, 131) centré respectivement par rapport à l'axe de rotation (RA).

12. Appareil d'examen par tomographie assistée par ordinateur avec un manipulateur (200') selon l'une des revendications précédentes.

FIG 1

200

FIG 2A

200

220

202

204

218

210

228

226

224

234

219 219a 219b

244

244b

260

270

280 250

FIG 2B

200

202    220    210    204

218

216

226

246

246b  246c

228    224    244a

248c                                    244b

248b

248

248a                                    244

238                                     234

219a

219 {                                   270

219b

260                              280

250

**FIG 2C**

FIG 2D

FIG 3

FIG 4
(STAND DER TECHNIK)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6196081 B1